(19)

(11) **EP 1 373 421 B1**

(12) **EUROPÄISCHE PATENTSCHRIFT**

(45) Veröffentlichungstag und Bekanntmachung des Hinweises auf die Patenterteilung:
**17.08.2011 Patentblatt 2011/33**

(21) Anmeldenummer: **02740422.7**

(22) Anmeldetag: **14.03.2002**

(51) Int Cl.:
***C09D 175/16*** *(2006.01)* ***C08G 18/62*** *(2006.01)*
***C08G 18/08*** *(2006.01)* ***C08G 18/80*** *(2006.01)*
***C08G 18/79*** *(2006.01)*

(86) Internationale Anmeldenummer:
**PCT/EP2002/002838**

(87) Internationale Veröffentlichungsnummer:
**WO 2002/079333 (10.10.2002 Gazette 2002/41)**

(54) **THERMISCH UND MIT AKTINISCHER STRAHLUNG HÄRTBARES GEMISCH UND SEINE VERWENDUNG**

MIXTURE WHICH CAN BE THERMALLY HARDENED AND HARDENED BY ACTINIC RADIATION AND USE THEREOF

MELANGE POUVANT ETRE DURCI THERMIQUEMENT ET PAR LE RAYONNEMENT ACTINIQUE, ET UTILISATION DUDIT MELANGE

(84) Benannte Vertragsstaaten:
**AT BE CH CY DE DK ES FI FR GB GR IE IT LI LU MC NL PT SE TR**

(30) Priorität: **29.03.2001 DE 10115604**

(43) Veröffentlichungstag der Anmeldung:
**02.01.2004 Patentblatt 2004/01**

(73) Patentinhaber: **BASF Coatings GmbH**
**48165 Münster (DE)**

(72) Erfinder:
- **WILKE, Guido**
  **48151 Münster (DE)**
- **RÖCKRATH, Ulrike**
  **48308 Senden (DE)**
- **JOOST, Karl-Heinz**
  **48317 Drensteinfurt (DE)**
- **WEGNER, Egon**
  **97209 Veitshöchheim (DE)**
- **BAUMGART, Hubert**
  **48163 Münster (DE)**
- **MEISENBURG, Uwe**
  **47051 Duisburg (DE)**

(74) Vertreter: **Leifert & Steffan**
**Patentanwälte**
**Burgplatz 21-22**
**40213 Düsseldorf (DE)**

(56) Entgegenhaltungen:
**WO-A-97/06197 WO-A-99/01499**
**DE-A- 19 855 146 US-A- 4 128 600**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 373 421 B1

## Beschreibung

Die vorliegende Erfindung betrifft ein neues thermisch und mit aktinischer Strahlung härtbares Gemisch. Außerdem betrifft die vorliegende Erfindung die Verwendung des neuen thermisch und mit aktinischer Strahlung härtbaren Gemischs als Beschichtungsstoff, Klebstoff oder Dichtungsmasse.

Unter aktinischer Strahlung ist hier und im folgenden elektromagnetische Strahlung wie nahes Infrarot, sichtbares Licht, UV-Strahlung oder Röntgenstrahlung, insbesondere UV- Strahlung, und Korpuskularstrahlung wie Elektronenstrahlung zu verstehen.

Die kombinierter Härtung durch Hitze und aktinische Strahlung wird von der Fachwelt auch als Dual-Cure bezeichnet. Demgemäß werden hier und im folgenden die in Rede stehenden neuen Gemische, Beschichtungsstoffe, Klebstoffe und Dichtungsmassen als Dual-Cure-Gemische, -Beschichtungsstoffe, -Klebstoffe und Dichtungsmassen bezeichnet.

Thermisch härtbare Gemische, enthaltend

- Bindemittelgemische, die frei sind von (Meth)Acryloylgruppen und (Meth)Acrylatcopolymerisate mit niedrigen Glasübergangstemperaturen Tg und (Meth)Acrylatcopolymerisate mit hohen Glasübergangstemperaturen Tg umfassen, und

- unblockierte Polyisocyanate,

sind aus dem europäischen Patent EP 0 843 694 B 1 bekannt. Die thermisch härtbaren Gemische sind als Klarlacke für die Automobilserienlackierung geeignet und liefern Klarlackierungen mit einer hohen Säurebeständigkeit, einem ausgezeichneten Decklackstand und einer guten Beständigkeit gegen Schwitzwasser. Sie können nicht mit aktinischer Strahlung gehärtet werden. Außerdem geht aus der europäischen Patentanmeldung nicht hervor, wie das Eigenschaftprofil der bekannten thermisch härtbaren Gemische über die Struktur der blockierten Polyisocyanate eingestellt werden könnte. Desweiteren dürfen die (Meth)Acrylatcopolymerisate mit niedrigen Glastemperaturen Tg kein Styrol und keine Styrolderivate enthalten, weswegen die Variation der stofflichen Zusammensetzung der betreffenden (Meth)Acrylatcopolymerisate stark eingeschränkt ist.

Dual-Cure-Gemische sind aus der deutschen Patentanmeldung DE 198 18 735 A 1 bekannt. Die Dual-Cure-Gemische enthalten zwingend Bestandteile, wie z. B. (Meth)Acrylatcopolymerisate, die neben isocyanatreaktiven funktionellen Gruppen obligatorisch (Meth)Acryloylgruppen aufweisen, und Bestandteile, wie z. B. (Meth)Acrylatcopolymerisate, die neben komplementären freien Isocyanatgruppen ebenfalls obligatorisch (Meth)Acryloylgruppen aufweisen. Außerdem können sie (Meth)Acrylatcopolymerisate enthalten, die frei von (Meth)Acryloylgruppen sind, indes isocyanatreaktive Gruppen aufweisen. Darüber hinaus beschreibt die deutsche Patentanmeldung eine Vielzahl von Alternativen zu diesen Komponenten, die allesamt als gleichwirkend dargestellt werden. So können beispielsweise anstelle der (Meth)Acrylatcopolymerisate, die neben isocyanatreaktiven funktionellen Gruppen obligatorisch (Meth)Acryloylgruppen aufweisen, die analogen Urethan(meth)acrylate verwendet werden. Außerdem wird nicht angegeben, welche Glasübergangstemperaturen Tg die (Meth)Acrylatcopolymerisate, die frei von (Meth)Acryloylgruppen sind, haben sollen.

Es wird zwar angegeben, daß die bekannten Dual-Cure-Beschichtungsstoffe Beschichtungen mit sehr guter Chemikalien-, Benzin- und Lösemittelbeständigkeit, hoher Kratzfestigkeit sowie guter und rascher Schleifbarkeit ergeben und in dieser Hinsicht den Anforderungen an eine Mehrschichtlackierung auf dem Gebiet der Fahrzeuglackierung, insbesondere der Fahrzeugreparaturlackierung, genügen sollen. Darüber hinaus sollen die Beschichtungen frei von Rißbildungen sein und eine gute Haftung zum Untergrund aufweisen. Insgesamt sollen sie ein einwandfreies optisches Aussehen zeigen. Wie jedoch dieses Eigenschaftsprofil im einzelnen eingestellt und optimiert werden kann und-welche der praktisch zahllosen Alternativen, die sich aus mehreren Listen herleiten lassen, am besten funktionieren, wird weder in der Beschreibung noch anhand eines Beispiels konkretisiert.

Aus der deutschen Patentanmeldung DE 199 20 799 A 1 sind Dual-Cure-Gemische bekannt, die der Herstellung von Versiegelungen für SMC (Sheet Moulded Compounds) und BMC (Bulk Moulded Compounds) dienen. Die Versiegelungen unterdrücken die Bildung von Mikrobläschen und haben eine glatte, von Oberflächenstrukturen wie Orangenhaut freie Oberfläche, die keine Nachbehandlung erfordert, sondern leicht und sicher überlackiert werden kann, ohne daß sich danach Probleme der Zwischenschichthaftung einstellen.

Das bekannte Dual-Cure-Gemisch enthält zwingend mindestens einen Bestandteil mit mindestens zwei funktionellen Gruppen, welche der Vernetzung mit aktinischer Strahlung dienen, und mindestens einer funktionellen Gruppe, die mit einer komplementären funktionellen Gruppe in einem anderen Bestandteil thermische Vernetzungsreaktionen eingehen kann, wie beispielsweise die aus der europäischen Patentanmeldung EP 0 928 800 A1 bekannten Isocyanatoacrylate.

Es kann unter anderem mindestens ein Urethan(meth)acrylat, das frei von isocyanatreaktiven funktionellen Gruppen ist, enthalten. Außerdem kann es Bestandteile, wie (Meth)Acrylatcopolymerisate, die (Meth)Acryloylgruppen sowie gegebenenfalls reaktive funktionelle Gruppen für die thermische Vernetzung enthalten, umfassen.

Darüber hinaus kann das Dual-Cure-Gemisch noch thermisch härtbare (Meth)Acrylatcopolymerisate enthalten, zu denen allerdings zahlreiche Alternativen angegeben werden. Außerdem werden die thermisch härtbaren (Meth) Acrylatcopolymerisate weder hinsichtlich ihrer Zusammensetzung, ihrer Glasübergangstemperatur Tg und ihres Gehalts an reaktiven funktionellen Gruppen für die thermische Vernetzung näher charakterisiert.

Desweiteren kann das Dual-Cure-Gemisch blockierte Polyisocyanate enthalten. Es wird jedoch nicht darauf hingewiesen, daß blockierte oder unblockierte Polyisocyanate, die mindestens ein weiches, flexibilisierendes Segment als Molekülbaustein enthalten, bevorzugt eingesetzt werden sollen.

Ein vergleichbarer Dual-Cure-Beschichtungsstoff ist aus der deutschen Patentanmeldung DE 199 20 801 A 1 bekannt. Was die thermisch härtbaren (Meth)Acrylatcopolymerisate betrifft, wird lediglich angegeben, daß ihre Menge im allgemeinen 40 Gew.-%, bezogen auf den Beschichtungsstoff, nicht überschreiten soll. Der bekannte Dual-Cure-Beschichtungsstoff wird zur Herstellung von mehrschtigen Klarlackierungen verwendet, die hochkratzfest, witterungsstabil, vergilbungsfrei, hart, flexibel und von Oberflächenstörungen frei sind, auf allen Substraten sowie innerhalb der Klarlackierungen eine hohe Haftung aufweisen und sich in der für einen hervorragenden optischen Gesamteindruck notwendigen hohen Schichtdicke herstellen lassen. Zu diesem Zweck wird eine Schicht aus dem Dual-Cure-Beschichtungsstoff mit einer weiteren Schicht aus dem Dual-Cure-Beschichtungsstoff, der Nanopartikel enthält, überschichtet, wonach man die beiden Schichten gemeinsam aushärtet. Dieses Verfahren ist aber vergleichsweise aufwendig.

Aus der internationalen Patentanmeldung WO 98/40170 ist ein Dual-Cure-Klarlack für ein Naß-in-naß-Verfahren bekannt, bei dem man eine Schicht aus einem Basislack mit einem Klarlack überschichtet, wonach man die resultierende Klarlackschicht vor dem gemeinsamen Einbrennen mit aktinischer Strahlung bestrahlt. Der Klarlack enthält, bezogen auf seinen Festkörper, 50 bis 98 Gew.-% aus einem thermisch durch Additions-und/oder Kondensationsreaktionen härtbaren System A), das im wesentlichen frei von radikalisch polymerisierbaren Doppelbindungen und im wesentlichen frei von mit radikalisch polymerisierbaren Doppelbindungen des Systems B) anderweitig reaktionsfähigen Gruppen ist, und 2 bis 50 Gew.-% aus einem unter Einwirkung von aktinischer Strahlung durch radikalische Polymerisation olefinischer Doppelbindungen härtbaren System B).

Vorzugsweise enthält das System A) ein hydroxyfunktionelles Acrylatbindemittel, dessen Glasübergangstemperatur jedoch nicht näher spezifiziert wird. Somit kann der Fachmann der internationalen Patentanmeldung nichts über die Bedeutung dieses Parameters für die Einstellung der Härte und der Kratzfestigkeit und anderer wichtiger anwendungstechnischer Eigenschaften von Klarlackierungen insbesondere in den Schattenzonen von komplex geformten dreidimensionalen Substraten entnehmen.

Das durch radikalische Polymerisation olefinischer Doppelbindungen härtbare System B) kann ein hexafunktionelles, aliphatisches. Urethanacrylat eines theoretischen Molgewichts von 800 oder 1.000 oder enthalten.

Der bekannte Dual-Cure-Klarlack kann ein Einkomponentensystem oder ein Zwei- oder Mehrkomponentensystems sein. Er soll eine Klarlackierung mit hervorragenden optisch-ästhetischen Eindruck liefern. Bei ihrer Herstellung soll es nicht zum Ablaufen an senkrechten Flächen kommen. Die Klarlackierung soll eine reduzierte Anfälligkeit gegen Chemikalien und Verkratzungen, insbesondere gegen Säure und Waschverkratzungen, aufweisen.

Damit Klarlackierungen auf dem ästhetisch und technologisch hoch anspruchsvollen Gebiet der Kraftfahrzeuglackierung eingesetzt werden können, müssen sie hart und kratzfest sein. Die Kratzfestigkeit kann aus der Flexibilität der Klarlackierungen resultieren, die bewirkt, daß Mikrokratzer, wie sie beispielsweise durch die Bürsten in Waschanlagen hervorgerufen werden, wieder zufließen. Die Kratzfestigkeit kann aber auch aus der Rückstellkraft der Klarlackierung resultieren, die auf einen hohen Speichermodul zurückgeht. Diese korreliert direkt mit der Vernetzungsdichte der Lakkierung.

Die bisher bekannten Dual-Cure-Gemische sind zwar in der Lage, dieses Problem bis zu einem gewissen Grad zu beheben, eine völlig befriedigende einfache Lösung existiert bisher jedoch nicht. Insbesondere ist nicht bekannt, in welcher Weise und in welchen Mengen die an sich bekannten Bestandteile von Dual-Cure-Gemischen des Standes der Technik gezielt miteinander kombiniert werden müssen, um harte und kratzfeste Klarlackierungen auch in den Schattenzonen von komplex geformten dreidimensionalen Substraten zu erhalten, wobei die Klarlackierungen außerdem noch eine hohe Chemikalienbeständigkeit, Witterungsbeständigkeit, . Schwitzwasserbeständigkeit und Zwischenschichthaftung aufweisen sollen.

Aufgabe der vorliegenden Erfindung ist es, ein neues thermisch und mit aktinischer Strahlung härtbares Gemisch zur Verfügung zustellen, das die Nachteile des Standes der Technik nicht meher länger aufweist. Das Dual-Cure-Gemisch soll in einfacher Weise herstellbar und als Beschichtungsstoff, Klebstoff oder Dichtungsmasse verwendbar sein. Die Dual-Cure-Beschichtungsstoffe, - Klebstoffe und -Dichtungsmassen sollen einfach applizierbar sein und Beschichtungen, Klebstoffe und Dichtungen mit einem sehr guten anwendungstechnischen Eigenschaftprofil liefern. Werden die Dual-Cure-Beschichtungsstoffe als Dual-Cure-Klarlacke verwendet, sollen sie harte, flexible, kratzfeste, chemikalien-, säure-, wasser- und witterungsstabile Klarlackierungen mit einem hervorragenden optischen Gesamteindruck und einer hervorragenden Zwischenschichthaftung liefern. Außerdem sollen sie eine gute bis sehr gute Haftung zu üblichen und bekannten Kraftfahrzeugreparaturlackierungen sowie zu Kraftfahrzeug-Serienreparaturlackierungen, bei denen bekanntermaßen fertig lackierte Karosserien noch einmal insgesamt mit den Originalserienlackierungen (OEM) überlackiert wurden, aufweisen.

Demgemäß wurde das neue thermisch und mit aktinischer Strahlung härtbare Gemisch gefunden, enthaltend

(A) ein Bindemittel, das frei ist von Kohlenstoff-Kohlenstoff Doppelbindungen, die mit aktinischer Strahlung aktivierbar sind, enthaltend mindestens ein (Meth)Acrylatcopolymerisat mit im statistischen Mittel mindestens einer isocyanatreaktiven funktionellen Gruppe im Molekül und einer Glasübergangstemperatur Tg von -40 bis +80°C,

(B) mindestens ein blockiertes und/oder unblockiertes Polyisocyanat, das mindestens ein weiches, flexibilisierendes Segment aufweist, das als Bestandteil dreidimensionaler polymerer Netzwerke deren Glasübergangstemperatur Tg erniedrigt, und

(C) mindestens ein ungesättigtes polyfunktionelles Urethan, das frei ist von isocyanatreaktiven funktionellen Gruppen und im statistischen Mittel mehr als vier mit aktinischer Strahlung aktivierbare Kohlenstoff-Kohlenstoff-Doppelbindungen und mindestens ein hartmachendes Segment im Molekül enthält, wobei das hartmachende Segment als Bestandteil dreidimensionaler polymerer Netzwerke deren Glasübergangstemperatur Tg erhöht.

Im folgenden wird das neue thermisch und mit aktinischer Strahlung härtbare Gemisch als "erfindungsgemäßes Dual-Cure-Gemisch" bezeichnet.

Weitere erfindungsgemäße Gegenstände ergeben sich aus der Beschreibung.

Im Hinblick auf den Stand der Technik war es überraschend und für den Fachmann nicht vorhersehbar, daß die der vorliegenden Erfindung zugrundeliegende Aufgabe mit Hilfe des erfindungsgemäßen Dual-Cure-Gemischs gelöst werden konnte. Insbesondere war es überraschend, daß das erfindungsgemäße Dual-Cure-Gemisch als Einkomponentensystem mit blockierten Polyisocyanaten (B) auch bei extremen klimatischen Bedingungen oder starken klimatischen Schwankungen lagerstabil war. Das Dual-Cure-Gemisch konnte sowohl als Einkomponentensystem als auch als Zwei- oder Mehrkomponentensystems als Beschichtungsstoff, Klebstoff oder Dichtungsmasse verwendet werden, wobei die außerordentlich breite Anwendbarkeit noch mehr überraschte. Die Dual-Cure-Beschichtungsstoffe, - Klebstoffe und -Dichtungsmassen waren einfach herstellbar und applizierbar und lieferten Beschichtungen, Klebschichten und Dichtungen mit einem sehr guten anwendungstechnischen Eigenschaftprofil. Wurden die Dual-Cure-Beschichtungsstoffe als Dual-Cure-Klarlacke verwendet, lieferten sie harte, flexible, kratzfeste, chemikalien-, säure-, wasser- und witterungsstabile Klarlackierungen mit einem hervorragenden optischen Gesamteindruck und einer hervorragenden Zwischenschichthaftung. Außerdem haben sie - auch in ungeschliffenem Zustand -eine gute bis sehr gute Haftung zu üblichen und Autoreparaturackierungen.

Der erste wesentliche Bestandteil des erfindungsgemäßen Dual-Cure-Gemischs ist ein Bindemittel (A), das frei von Kohlenstoff Kohlenstoff Doppelbindungen, die mit aktinischer Strahlung aktivierbar sind. Im Rahmen der vorliegenden Erfindung bedeutet "frei von Kohlenstoff Kohlenstoff Doppelbindungen", daß die betreffenden Bindemittel (A) keine oder nur technisch bedingte Spuren solcher Doppelbindungen aufweisen.

Das Bindemittel (A) enthält mindestens ein, vorzugsweise mindestens zwei, (Meth)Acrylatcopolymerisat(e) (A) mit im statistischen Mittel mindestens einer, vorzugsweise mindestens zwei, besonders bevorzugt mindestens drei und insbesondere mindestens vier isocyanatreaktiven funktionellen Gruppen im Molekül.

Beispiele geeigneter isocyanatreaktiver funktioneller Gruppen sind Thiol-, Hydroxyl- und primäre und sekundäre Aminogruppen, insbesondere Hydroxylgruppen.

Das (Meth)Acrylatcopolymerisat (A) oder die Mischung aus mindestens zwei (Meth)Acrylatcopolymerisaten (A) weist eine Glasübergangstemperatur Tg von - 40 bis +80 °C auf.

Wird nur ein (Meth)Acrylatcopolymerisat (A) eingesetzt, kann es eine niedrige oder eine hohe Glasübergangstemperatur Tg aufweisen. Vorzugsweise weist das (Meth)Acrylatcopolymerisat (A) eine niedrige Glasübergangstemperatur Tg, bevorzugt unterhalb der Raumtemperatur, insbesondere unterhalb 0 °C, auf.

In einer bevorzugten Ausführungsform enthält das Bindemittel (A) mindestens ein, insbesondere ein, (Meth) Acrylatcopolymerisat (A 1) und mindestens ein, insbesondere ein, (Meth)Acrylatcopolymerisat (A2) oder das Bindemittel besteht aus diesen (Meth) Acrylatcopolymerisaten (A1) und (A2).

Das (Meth)Acrylatcopolymerisat (A 1) weist im statistischen Mittel mindestens eine, vorzugsweise mindestens zwei, besonders bevorzugt mindestens drei und insbesondere mindestens vier isocyanatreaktive funktionelle Gruppe (n) im Molekül und eine Glasübergangstemperatur Tg unterhalb der Raumtemperatur, vorzugsweise unterhalb 0, bevorzugt unterhalb -5, besonders bevorzugt unterhalb -10, ganz besonders bevorzugt unterhalb -15 und insbesondere unterhalb -20°C auf.

Das (Meth)Acrylatcopolymerisat (A 2) weist mit im statistischen Mittel mindestens eine, vorzugsweise mindestens zwei, besonders bevorzugt mindestens drei und insbesondere mindestens vier isocyanatreaktive funktionelle Gruppe(n) im Molekül und eine Glasübergangstemperatur Tg oberhalb der Raumtemperatur, vorzugsweise oberhalb 30, vorzugsweise oberhalb 32, bevorzugt oberhalb 35, besonders bevorzugt oberhalb 40, ganz besonders bevorzugt oberhalb 42 und insbesondere oberhalb 45°C auf.

Beispiele geeigneter isocyanatreaktiver Gruppen zur Verwendung in den (Meth)Acrylatcopolynierisaten (A 1) und (A 2) sind Hydroxylgruppen, Thiolgruppen und primäre und sekundäre Aminogruppen. Dabei können die (Meth) Acrylatcopolymerisate (A 1) und (A 2) unterschiedliche oder gleiche isocyanatreaktive Gruppen oder Kombinationen von isocyanatreaktiven Gruppen enthalten, wobei die Anzahl der isocyanatreaktiven Gruppen in den (Meth)Acrylatcopolymerisaten (A 1) einerseits und den (Meth)Acrylatcopolymerisaten (A 2) andererseits gleich oder verschieden sein kann. Beispielsweise können die (Meth)Acrylatcopolymerisate (A 1) Hydroxylgruppen und die (Meth)Acrylatcopolymerisate (A 2) sekundäre und/oder primäre Aminogruppen enthalten. Zahlreiche weitere Permutationen sind hier denkbar, die der Fachmann in einfacher Weise herleiten kann, so daß hier nicht im Detail darauf ein gegangen werden muß.

Vorzugsweise werden Hydroxylgruppen eingesetzt.

Der Gehalt der (Meth)Acrylatcopolymerisate (A 1) und (A 2) an Hydroxylgruppen kann breit variieren. Die Untergrenze ergibt sich aus der Maßgabe, daß mindestens eine Hydroxylgruppe in den (Meth)Acrylatcopolymerisaten (A 1) und (A 2) enthalten sein muß. Vorzugsweise liegt die Hydroxylzahl bei 50 bis 300, vorzugsweise 80 bis 250, bevorzugt 100 bis 220, besonders bevorzugt 120 bis 200, ganz besonders bevorzugt 140 bis 190 und insbesondere 150 bis 185 mg KOH/g.

Die (Meth)Acrylatcopolymerisate (A 1) und (A 2) weisen eine Säurezahl von 0 bis 70, vorzugsweise 3 bis 65, bevorzugt 5 bis 60, besonders bevorzugt 7 bis 55, ganz besonders bevorzugt 10 bis 50 und insbesondere 12 bis 45 mg KOH/g auf. Auch hier gilt, daß eines der (Meth)Acrylatcopolymerisate (A 1) oder (A 2) eine Säurezahl von 0 mg KOH/g aufweisen kann, wogegen das andere (Meth)Acrylatcopolymerisat (A 2) oder (A 1) eine Säurezahl > 0 mg KOH/g hat. Vorzugsweise haben die (Meth)Acrylatcopolymerisate (A 1) und (A 2) die gleiche oder in etwa die gleiche Säurezahl.

Das Gewichtsverhältnis von (Meth)Acrylatcopolymerisat (A 1) zu (Meth)Acrylatcopolymerisat (A 2) kann von Bindemittel (A) zu Bindemittel (A) breit variieren. Vorzugsweise liegt das Gewichtsverhältnis von (A 1) zu (A 2) bei 1 : 10 bis 10 : 1, bevorzugt 1 : 8 bis 8 : 1, besonders bevorzugt 1 : 6 bis 6 : 1, ganz besonders bevorzugt 1 : 4 bis 4 : 1 und insbesondere 1 : 2 bis 2 : 1.

Es ist ein besonderer Vorteil des erfindungsgemäßen Gemischs, daß die vorstehend beschriebenen (Meth) Acrylatcopolymerisate (A 1) und (A 2) auch einzeln als Bindemittel (A) eingesetzt werden können, ohne daß hierbei eine Verringerung des erfindungsgemäß bezweckten vorteilhaften technischen Effekts zu befürchten wäre. Denn es ist noch ein weiterer ganz besonderer Vorteil des erfindungsgemäßen Gemischs, daβ eine u. U. durch die Wahl des Bindemittels (A) hervorgerufene ggf. unerwünschte Änderung des Eigenschaftprofils leicht durch die entsprechende Auswahl der nachstehend beschriebenen blockierten oder unblockierten Polyisocyanate (B) und/oder der nachstehend beschriebenen ungesättigten polyfunktionellen Urethane (C) kompensiert oder sogar überkompensiert werden kann.

Die vorstehend beschriebenen (Meth)Acrylatcopolymerisate (A), inklusive der (Meth)Acrylatcopolymerisate (A 1) und (A 2), werden durch radikalische Copolymerisation von mindestens zwei, vorzugsweise mindestens drei und insbesondere mindestens vier unterschiedlichen olefinisch ungesättigten Monomeren (a) hergestellt.

Bei einem der Monomeren (a) handelt es sich um ein olefinisch ungesättigtes Monomer (a1), durch das isocyanatreaktive funktionelle Gruppen in die (Meth)Acrylatcopolymerisate (A) eingeführt werden. Bei mindestens einem der weiteren Monomeren (a) handelt es sich im wesentlichen um olefinisch ungesättigte Monomere (a2), die keine isocyanatreaktiven funktionellen Gruppen aufweisen. Diese Monomeren (a2) können frei von reaktiven funktionellen Gruppen sein oder reaktive funktionelle Gruppen aufweisen, die mit anderen, komplementären reaktiven funktionellen Gruppen, ausgenommen Isocyanatgruppen, thermische Vernetzungsreaktionen eingehen können.

Beispiele geeigneter olefinisch ungesättigter Monomere (a1) sind

- Hydroxyalkylester von alpha,beta-olefinisch ungesättigten Carbonsäuren, wie Hydroxyalkylester der Acrylsäure, Methacrylsäure und Ethacrylsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat oder -ethacrylat; 1,4-Bis(hydroxymethyl)cyclohexan-, Octahydro-4,7-methano-1H-inden-dimethanol- oder Methylpropandiolmonoacrylat, -monomethacrylat, - monoethacrylat oder -monocrotonat; oder Umsetzungsprodukte aus cyclischen Estern, wie z.B. epsilon-Caprolacton und diesen Hydroxyalkylestern;

- olefinisch ungesättigte Alkohole wie Allylalkohol;

- Allylether von Polyolen wie Trimethylolpropanmonoallylether oder Pentaerythritmono-, -di- oder triallylether. Die höherfunktionellen Monomeren (a1) werden im allgemeinen nur in untergeordneten Mengen verwendet. Im Rahmen der vorliegenden Erfindung sind hierbei unter untergeordneten Mengen an höherfunktionellen Monomeren solche Mengen zu verstehen, welche nicht zur Vernetzung oder Gelierung der (Meth)Acrylatcopolymerisate (A 1) und/oder (A 2) führen, es sei denn, die (Meth)Acrylatcopolymerisate (A 1) und/oder (A 2) sollen in der Form von vernetzten Mikrogelteilchen vorliegen;

- Umsetzungsprodukte von alpha,beta-olefinisch Carbonsäuren mit Glycidylestern einer in alpha-Stellung verzweigten Monocarbonsäure mit 5 bis 18 Kohlenstoffatomen im Molekül. Die Umsetzung der Acryl- oder Methacrylsäure mit dem Glycidylester einer Carbonsäure mit einem tertiären alpha-Kohlenstoffatom kann vorher, während oder nach der Polymerisationsreaktion erfolgen. Bevorzugt wird als Komponente (a1) das Umsetzungsprodukt von Acryl- und/oder Methacrylsäure mit dem Glycidylester der Versatic®-Säure eingesetzt. Dieser Glycidylester ist unter dem Namen Cardura® E10 im Handel erhältlich. Ergänzend wird auf Römpp Lexikon Lacke und Druckfarben, Georg Thieme Verlag, Stuttgart, New York, 1998, Seiten 605 und 606, verwiesen;

- Allylamin und Crotylamin;

- Aminoalkylester von alpha,beta-olefinisch ungesättigten Carbonsäuren, wie Aminoethylacrylat, Aminoethylmethacrylat oder N-Methylaminoethylacrylat;

- Formaldehydaddukte von Aminoalkylestern von alpha,beta-olefinisch ungesättigten Carbonsäuren und von alpha, beta-ungesättigten Carbonsäureamiden, wie N-Methylol- und N,N-Dimethylol-aminoethylacrylat, -aminoethylmethacrylat, -acrylamid und - methacrylamid; sowie

- Acryloxysilangruppen und Hydroxylgruppen enthaltende olefinisch ungesättigte Monomere, herstellbar durch Umsetzung hydroxyfunktioneller Silane mit Epichlorhydrin und anschließender Umsetzung des Zwischenprodukts mit einer alpha,beta-olefinisch ungesättigten Carbonsäure, insbesondere Acrylsäure und Methacrylsäure, oder ihren Hydroxyalkylestern.

Von diesen Monomeren (a1) sind die Hydroxyalkylester, insbesondere die 2-Hydroxyethyl-, 2-Hydroxypropyl-, 3-Hydroxypropyl-, 3-Hydroxybutyl-, 4-Hydroxybutylester der Acrylsäure und Methacrylsäure von Vorteil und werden deshalb besonders bevorzugt verwendet.

Beispiele geeigneter olefinisch ungesättigter Monomere (a2) sind

- alpha,beta-olefinisch ungesättigte Carbonsäuren, wie Acrylsäure, Methacrylsäure, Ethacrylsäure, Crotonsäure, Maleinsäure, Fumarsäure, Itaconsäure, Maleinsäure-mono(meth)acryloyloxyethylester, Bernsteinsäuremono(meth) acryloyloxyethylester und Phthalsäuremono(meth)acryloyloxyethylester, sowie Vinylbenzoesäure (alle Isomere) und alpha-Methylvinylbenzoesäure (alle Isomere), insbesondere/Acrylsäure und/oder Methacrylsäure;

- Alkyl- und Cycloalkylester von alpha,beta-olefinisch ungesättigten Carbonsäuren, -phosphonsäuren und -sulfonsäuren, wie (Meth)Acrylsäure-, Crotonsäure-, Ethacrylsäure-, Vinylphosphonsäure- oder Vinylsulfonsäurealkyl- oder -cycloalkylester mit bis zu 20 Kohlenstoffatomen im Alkylrest, insbesondere Methyl-, Ethyl-, Propyl-, n-Butyl-, sec.-Butyl-, tert.-Butyl-, Hexyl-, Ethylhexyl-, Stearyl- und Laurylacrylat, -methacrylat, -crotonat, -ethacrylat oder -vinylphosphonat oder vinylsulfonat; cycloaliphatische (Meth)acrylsäure-, Crotonsäure-, Ethacrylsäure-, Vinylphosphonsäure- oder Vinylsulfonsäureester, insbesondere Cyclohexyl-, Isobomyl-, Dicyclopentadienyl-, Octahydro-4,7-methano-1H-inden-methanol- oder tert.-Butylcyclohexyl(meth)acrylat, -crotonat, -ethacrylat, -vinylphosphonat oder vinylsulfonat. Diese können in untergeordneten Mengen höherfunktionelle (Meth)Acrylsäure-, Crotonsäure- oder Ethacrylsäurealkyl- oder -cycloalkylester wie Ethylengylkol-, Propylenglykol-, Diethylenglykol-, Dipropylenglykol-, Butylenglykol-, Pentan-1,5-diol-, Hexan-1,6-diol-, Octahydro-4,7-methano-1H-inden-dimethanol- oder Cyclohexan-1,2-, -1,3- oder -1,4-diol-di(meth)acrylat; Trimethylolpropantri(meth)acrylat; oder Pentaerythrittetra(meth)acrylat sowie die analogen Ethacrylate oder Crotonate enthalten. Im Rahmen der vorliegenden Erfindung sind hierbei unter untergeordneten Mengen an höherfunktionellen Monomeren (a2) solche Mengen zu verstehen, welche nicht zur Vernetzung oder Gelierung der (Meth)Acrylatcopolymerisate (A) führen, es sei denn, die (Meth)Acrylatcopolymerisate (A) sollen in der Form von vernetzten Mikrogelteilchen vorliegen;

- Allylether von Alkoholen, wie Allylethylether, Allylpropylether oder Allyl-n-butylether, oder von Polyolen, wie Ethylenglykoldiallylether, Trimethylolpropantriallylether oder Pentaerythrittetrallyläther. Hinsichtlich der höherfunktionellen Allylether (a2) gilt das vorstehend Gesagte sinngemäß;

- Olefine wie Ethylen, Propylen, But-1-en, Pent-1-en, Hex-1-en, Cyclohexen, Cyclopenten, Norbonen, Butadien, Isopren, Cylopentadien und/oder Dicyclopentadien;

- Amide von alpha,beta-olefinisch ungesättigten Carbonsäuren, wie (Meth)Acrylsäureamid, N-Methyl -, N,N-Dimethyl-, N-Ethyl-, N,N-Diethyl-, N-Propyl-, N,N-Dipropyl, N-Butyl-, N,N-Dibutyl- und/oder N,N-Cyclohexyl-methyl-(meth) acrylsäureamid;

- Epoxidgruppen enthaltende Monomere, wie der Glycidylester der Acrylsäure, Methacrylsäure, Ethacrylsäure, Crotonsäure, Maleinsäure, Fumarsäure und/oder Itaconsäure;

- vinylaromatische Kohlenwasserstoffe, wie Styrol, alpha-Alkylstyrole, insbesondere alpha-Methylstyrol und Vinyltoluol, und Diphenylethylen oder Stilben;

- Nitrile, wie Acrylnitril und/oder Methacrylnitril;

- Vinylverbindungen wie Vinylchlorid, Vinylfluorid, Vinylidendichlorid, Vinylidendifluorid; N-Vinylpyrrolidon; Vinylether wie Ethylvinylether, n-Propylvinylether, Isopropylvinylether, n-Butylvinylether, Isobutylvinylether und/oder Vinylcyclohexylether, Vinylester wie Vinylacetat, Vinylpropionat, Vinylbutyrat, Vinylpivalat, Vinylester der Versatic®-Säuren, die unter dem Markennamen VeoVa® von der Firma Deutsche Shell Chemie vertrieben werden (ergänzend wird auf Römpp Lexikon Lacke und Druckfarben, Georg Thieme Verlag, Stuttgart, New York, 1998, Seite 598 sowie Seiten 605 und 606, verwiesen) und/oder der Vinylester der 2-Methyl-2-ethylheptansäure; und

- Polysiloxanmakromonomere, die ein zahlenmittleres Molekulargewicht Mn von 1.000 bis 40.000, bevorzugt von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE 38 07 571 A 1 auf den Seiten 5 bis 7, der DE 37 06 095 A 1 in den Spalten 3 bis 7, der EP 0 358 153 B 1 auf den Seiten 3 bis 6, in der US 4,754,014 A 1 in den Spalten 5 bis 9, in der DE 44 21 823 A 1 oder in der der internationalen Patentanmeldung WO 92/22615 auf Seite 12, Zeile 18, bis Seite 18, Zeile 10, beschrieben sind.

Generell gilt, das die Monomeren (a1) und (a2) so ausgewählt werden, daß das Eigenschaftsprofil der (Meth) Acrylatcopolymerisate (A) im wesentlichen von den vorstehend beschriebenen (Meth)Acrylatmonomeren (a1) und (a2) bestimmt wird, wobei die Monomeren (a1) und/oder (a2), die anderen Monomerklassen entstammen, dieses Eigenschaftsprofil in vorteilhafter Weise breit und gezielt variieren. Dabei werden die Monomeren (a) so ausgewählt, daß sich die vorstehend beschriebenen Glasübergangstemperaturen Tg sowie die Hydroxylzahlen und Säurezahlen einstellen.

Die Auswahl der Monomeren (a) kann vom Fachmann unter Zuhilfenahme der folgenden Formel von Fox, mit der die Glasübergangstemperaturen von Polyacrylatharzen näherungsweise berechnet werden können, vorgenommen werden:

$$1/Tg = \sum_{n=1}^{n=x} W_n/Tg_n; \quad \sum_n W_n = 1$$

| | |
|---|---|
| Tg = | Glasübergangstemperatur des (Meth)Acrylatcopolymerisats |
| $W_n$= | Gewichtsanteil des n-ten Monomers |
| $Tg_n$ = | Glasübergangstemperatur des Homopolymers aus dem n-ten Monomer |
| x = | Anzahl der verschiedenen Monomeren |

Methodisch gesehen weist die Copolymerisation keine Besonderheiten auf, sondern erfolgt mit Hilfe der Methoden und Vorrichtungen, wie sie üblicherweise für die radikalische Copolymerisation in Lösung oder in Masse in der Gegenwart eines radikalischen Initiators angewandt werden.

Als Beispiele für einsetzbare radikalische Initiatoren werden genannt: Dialkylperoxide, wie Di-tert.-Butylperoxid oder Dicumylperoxid; Hydroperoxide, wie Cumolhydroperoxid oder tert.- Butylhydroperoxid; Perester, wie tert.-Butylperbenzoat, tert.-Butylperpivalat, tert.-Butylper-3,5,5-trimethyl-hexanoat oder tert.-Butylper-2-ethylhexanoat; Peroxodicarbonate; Kalium-, Natrium- oder Ammoniumsperoxodisulfat; Azoinitiatoren, beispielsweise Azodinitrile wie Azobisisobutyronitril; C-C-spaltende Initiatoren wie Benzpinakolsilylether; oder eine Kombination eines nicht oxidierenden Initiators mit Wasserstoffperoxid. Es können auch Kombinationen der vorstehend beschriebenen Initiatoren eingesetzt werden. Weitere Beispiele geeigneter Initiatoren werden in der deutschen Patentanmeldung DE-A-196 28 142, Seite 3, Zeile 49, bis Seite 4, Zeile 6, beschrieben.

In den organischen Lösungen oder in Masse werden dann die Monomeren (a) mit Hilfe der vorstehend genannten radikalbildenden Initiatoren bei Reaktionstemperaturen, die vorzugsweise unterhalb der niedrigsten Zersetzungstemperatur der jeweils eingesetzten Monomeren (a) liegen, copolymerisiert.

Beispiele organischer Lösemittel werden in »Paints, Coatings and Solvents«, Dieter Stoye und Werner Freitag (Editoren), Wiley-VCH, 2. Auflage, 1998, Seiten 327 bis 349, beschrieben.

Es ist bevorzugt, daß mit dem Initiatorzulauf einige Zeit, im allgemeinen ca. 1 bis 15 Minuten, vor dem Zulauf der Monomeren begonnen wird. Ferner ist ein Verfahren bevorzugt, bei dem die Initiatorzugabe zum gleichen Zeitpunkt wie die Zugabe der Monomeren begonnen und etwa eine halbe Stunde, nachdem die Zugabe der Monomeren beendet worden ist, beendet wird. Der Initiator wird vorzugsweise in konstanter Menge pro Zeiteinheit zugegeben. Nach Beendigung der Initiatorzugabe wird das Reaktionsgemisch noch so lange (in der Regel 1 bis 6 Stunden) auf Polymerisationstemperatur gehalten, bis alle eingesetzten Monomere (a) im wesentlichen vollständig umgesetzt worden sind. "Im wesentlichen vollständig umgesetzt" soll bedeuten, daß vorzugsweise 100 Gew.-% der eingesetzten Monomere umgesetzt worden sind, daß es aber auch möglich ist, daß ein geringer Restmonomerengehalt von höchstens bis zu etwa 0,5 Gew.-%, bezogen auf das Gewicht der Reaktionsmischung, unumgesetzt zurückbleiben kann.

Als Reaktoren für die Copolymerisation kommen die üblichen und bekannten Rührkessel, Rührkesselkaskaden, Rohrreaktoren, Schlaufenreaktoren oder Taylorreaktoren, wie sie beispielsweise in der Patentschrift DE 1 071 241 B 1, den Patentanmeldungen EP 0 498 583 A 1 oder DE 198 28 742 A 1 oder in dem Artikel von K. Kataoka in Chemical Engineering Science, Band 50, Heft 9, 1995, Seiten 1409 bis 1416, beschrieben werden, in Betracht.

Hinsichtlich der Molekulargewichtsverteilung ist das (Meth)Acrylatcopolymerisat (A) keinerlei Beschränkungen unterworfen. Vorteilhafterweise wird aber die Copolymerisation so geführt, daß eine Molekulargewichtsverteilung Mw/Mn, gemessen mit Hilfe der Gelpermeationschromatographie unter Verwendung von Polystyrol als Standard, von $\leq 4$, bevorzugt $\leq 2$ und insbesondere $\leq 1,5$ sowie in einzelnen Fällen auch $\leq 1,3$ resultiert.

Der Gehalt des erfindungsgemäßen Dual-Cure-Gemischs an dem vorstehend beschriebenen Bindemitteln (A) kann breit variieren und richtet sich nach den Erfordernissen des Einzelfalls. Wesentlich ist hierbei die Funktionalität des Bindemittels (A) hinsichtlich der thermischen Vernetzung, d. h., die Anzahl der in dem Bindemittelgemisch (A) enthaltenen isocyanatreaktiven Gruppen. Der Fachmann kann daher den Gehalt aufgrund seines allgemeinen Fachwissens gegebenenfalls mit Hilfe einfacher orientierender Versuche leicht ermitteln. Vorzugsweise liegt der Gehalt, bezogen auf den Festkörper des erfindungsgemäßen Dual-Cure-Gemischs, bei 10 bis 80, bevorzugt 15 bis 75, besonders bevorzugt 20 bis 70, ganz besonders bevorzugt 25 bis 65 und insbesondere 30 bis 60 Gew.-%.

Das erfindungsgemäße Dual-Cure-Gemisch enthält außerdem mindestens ein blockiertes oder unblockiertes Polyisocyanat (B), das mindestens ein weiches, flexibilisierendes Segment aufweist, das als Bestandteil oder Baustein dreidimensionaler polymerer Netzwerke deren Glasübergangstemperatur Tg erniedrigt.

Die weichen, flexibilisierden Segmente sind zweibindige organische Reste.

Beispiele geeigneter weicher, flexibilisierender, zweibindiger organischer Reste sind substituierte oder unsubstituierte, bevorzugt unsubstituierte, lineare oder verzweigte, vorzugsweise lineare, Alkandiyl-Reste mit 4 bis 30, bevorzugt 5 bis 20 und insbesondere 6 Kohlenstoffatomen, die innerhalb der Kohlenstoffkette auch cyclische Gruppen enthalten können.

Beispiele gut geeigneter linearer Alkandiyl-Reste sind sind Tetramethylen, Pentamethylen, Hexamethylen, Heptamethylen, Octamethylen, Nonan-1,9-diyl, Decan-1,10-diyl, Undecan-1,11-diyl Dodecan-1,12-diyl, Tridecan-1,13-diyl, Tetradecan-1,14-diyl, Pentadecan-1,15-diyl, Hexadecan-1,16-diyl, Heptadecan-1,17-diyl, Octadecan-1,18-diyl, Nonadecan-1,19-diyl oder Eicosan-1,20-diyl, bevorzugt Tetramethylen, Pentamethylen, Hexamethylen, Heptamethylen, Octamethylen, Nonan-1,9-diyl, Decan-1,10-diyl, insbesondere Hexamethylen.

Beispiele gut geeigneter Alkandiyl-Reste, die in der Kohlenstoffkette auch cyclische Gruppen enthalten, sind 2-Heptyl-1-pentyl-cyclohexan-3,4-bis(non-9-yl), Cyclohexan-1,2-, -1,4- oder-1,3-bis(methyl), Cyclohexan-1,2-, 1,4-oder-1,3-bis(eth-2-yl), Cyclohexan-1,3-bis(prop-3-yl) oder Cyclohexan 1,2-, 1,4- oder 1,3-bis(but-4-yl).

Weitere Beispiele geeigneter zweibindiger organischer Reste sind zweiwertige Polyesterreste mit wiederkehrenden Polyesteranteilen der Formel $-(-CO-(CHR^1)_m- CH_2-O-)-$ aus. Hierbei ist der Index m bevorzugt 4 bis 6 und der Substitutent $R^1$ = Wasserstoff, ein Alkyl-, Cycloalkyl- oder Alkoxy-Rest. Kein Substituent enthält mehr als 12 Kohlenstoffatome.

Weitere Beispiele geeigneter zweibindiger organischer Reste sind zweiwertige lineare Polyetherreste, vorzugsweise mit einem zahlenmittleren Molekulargewicht von 400 bis 5.000, insbesondere von 400 bis 3.000. Gut geeignete Polyetherreste haben die allgemeine Formel $-(-O-(CHR^2)_o-)_pO-$, wobei der Substituent $R^2$ = Wasserstoff oder ein niedriger, gegebenenfalls substituierter Alkylrest ist, der Index o = 2 bis 6, bevorzugt 3 bis 4, und der Index p = 2 bis 100, bevorzugt 5 bis 50, ist. Als besonders gut geeignete Beispiele werden lineare oder verzweigte Polyetherreste, die sich von Poly(oxyethylen)glykolen, Poly(oxypropylen)glykolen und Poly(oxybutylen)glykolen ableiten, genannt.

Des weiteren kommen auch lineare zweibindige Siloxanereste, wie sie beispielsweise in Siliconkautschuken vorliegen, hydrierte Polybutadien- oder Polyisoprenreste, statistische oder alternierende Butadien-Isopren-Copolymerisatreste oder Butadien-Isopren-Pfropfmischpolymerisatreste, die noch Styrol einpolymerisiert enthalten können, sowie Ethylen-Propylen-Dienreste in Betracht.

Als Substitutienten kommen alle organischen funktionellen Gruppen in Betracht, welche im wesentlichen inert sind, d. h., daß sie keine Reaktionen mit den Bestandteilen der erfindungsgemäßen Dual-Cure-Gemische eingehen.

Beispiele geeigneter inerter organischer Reste sind Alkylgruppen, insbesondere Methylgruppen, Halogenatome, Nitrogruppen, Nitrilgruppen oder Alkoxygruppen.

Von den vorstehend beschriebenen zweibindigen organischen Resten sind die Alkandiyl- Reste, die keine cyclischen Gruppen in der Kohlenstoffkette enthalten, von Vorteil und werden deshalb bevorzugt verwendet.

In den blockierten oder unblockierten Polyisocyanaten (B) kann nur eine Art der vorstehend beschriebenen weichen, flexibilisierenden, zweibindigen organischen Reste vorliegen. Es können aber auch mindestens zwei unterschiedliche zweibindige organische Reste verwendet werden.

Beispiele gut geeigneter Polyisocyanate (B), die auch zur Herstellung der blockierten Polyisocyanate (B) geeignet sind, sind acyclische aliphatische Diisocyanate wie Trimethylendiisocyanat, Tetramethylendiisocyanat, Pentamethylendiisocyanat, Hexamethylendiisocyanat, Heptamethylendiisocyanat, Ethylethylendiisocyanat, Trimethylhexandiisocyanat oder acyclische aliphatische Diisocyanate, die eine cyclische Gruppen in ihrer Kohlenstoffkette enthalten, wie Diisocyanate, abgeleitet von Dimerfettsäuren, wie sie unter der Handelsbezeichnung DDI 1410 von der Firma Henkel vertrieben und in den Patentschriften WO 97/49745 und WO 97/49747 beschrieben werden, insbesondere 2-Heptyl-3,4-bis(9-isocyanatononyl)-1-pentyl-cyclohexan, oder 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan oder 1,2-, 1,4- oder 1,3-Bis(4-isocyanatobut-1-yl)cyclohexan. Letztere sind im Rahmen der vorliegenden Erfindung aufgrund ihrer beiden aussschließlich an Alkylgruppen gebundenen Isocyanatgruppen trotz ihrer cyclischen Gruppen zu den acyclischen aliphatischen Diisocyanaten zu zählen.

Von diesen acyclischen aliphatischen Diisocyanaten (B) sind diejenigen von besonderem Vorteil, die keine cyclischen Gruppen in ihrer Kohlenstoffkette enthalten. Von diesen ist wiederum Hexamethylendiisocyanat ganz besonders vorteilhaft und wird deshalb ganz besonders bevorzugt verwendet.

Weitere Beispiele geeigneter Polyisocyanate (B), die auch zur Herstellung von blockierten Polyisocyanaten (B) geeignet sind, sind die Oligomeren der vorstehend genannten Diisocyanate, insbesondere von Hexamethylendiisocyanat, die Isocyanurat-, Harnstoff-, Urethan-, Biuret-, Uretdion-, Iminooxadiazindion, Carbodiimid- und/oder Allophanatgruppen enthalten. Beispiele geeigneter Herstellungsverfahren sind aus den Patentschriften CA 2,163,591 A, US 4,419,513 A, US 4,454,317 A, EP 0 646 608 A, US 4,801,675 A, EP 0 183 976 A1, DE 40 15 155 A1, EP 0 303 150 A1, EP 0 496 208 A1, EP 0 524 500 A1, EP 0 566 037 A1, US 5,258,482 A1, US 5,290,902 A1, EP 0 649 806 A1, DE 42 29 183 A1 oder EP 0 531 820 A1 bekannt oder sie werden in der nicht vorveröffentlichten deutschen Patentanmeldung DE 100 05 228.2 beschrieben.

Außerdem kommen die hochviskosen Polyisocyanate (B), wie sie in der deutschen Patentanmeldung DE 198 28 935 A1 beschrieben werden, oder die an ihrer Oberfläche durch Harnstoffbildung und/oder Blockierung desaktivierten Polyisocyanatspartikel gemäß den europäischen Patentanmeldungen EP 0 922 720 A1, EP 1 013 690 A1 und EP 1 029 879 A1 in Betracht.

Desweiteren kommen die in der deutschen Patentanmeldung DE 196 09 617 A1 beschriebenen Addukte von Polyisocyanaten mit isocyanatreaktiven funktionellen Gruppen enthaltenden Dioxanen, Dioxolanen und Oxazolidinen, die noch freie Isocyanatgruppen enthalten, als Polyisocyanate (B) in Betracht.

Beispiele für geeignete Blockierungsmittel zur Herstellung der blockierten Polyisocyanate (B) sind die aus der US-Patentschrift US 4,444,954 A oder US 5,972,189 A bekannten Blockierungsmittel, wie

i) Phenole wie Phenol, Cresol, Xylenol, Nitrophenol, Chlorophenol, Ethylphenol, t-Butylphenol, Hydroxybenzoesäure, Ester dieser Säure oder 2,5- di-tert.-Butyl-4-hydroxytoluol;

ii) Lactame, wie ε-Caprolactam, δ-Valerolactam, γ-Butyrolactam oder β-Propiolactam;

iii) Alkohole wie Methanol, Ethanol, n-Propanol, Isopropanol, n-Butanol, Isobutanol, t-Butanol; n-Amylalkohol, t-Amylalkohol, Laurylalkohol, Ethylenglykolmonomethylether, Ethylenglykolmonoethylether, Ethylenglykolmonopropylether Ethylenglykolmonobutylether, Diethylenglykolmonomethylether, Diethylenglykolmonoethylether, Diethylenglykolmonopropylether, Diethylenglykolmonobutylether Propylenglykolmonomethylether, Methoxymethanol, 2-(-Hydroxyethoxy)phenol, 2-(Hydroxypropoxy)phenol, Glykolsäure, Glykolsäureester, Milchsäure, Milchsäureester, Methylolharnstoff, Methylolmelamin, Diacetonalkohol, Ethylenchlorohydrin, Ethylenbromhydrin, 1,3-Dichloro-2-propanol, 1,4-Cyclohexyldimethanol oder Acetocyanhydrin;

iv) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol;

v) Säureamide wie Acetoanilid, Acetoanisidinamid, Acrylamid, Methacrylamid, Essigsäureamid, Stearinsäureamid oder Benzamid;

vi) Imide wie Succinimid, Phthalimid oder Maleimid;

vii) Amine wie Diphenylamin, Phenylnaphthylamin, Xylidin, N-Phenylxylidin, Carbazol, Anilin, Naphthylamin, Butylamin, Dibutylamin oder Butylphenylamin;

viii) Imidazole wie Imidazol oder 2-Ethylimidazol;

ix) Harnstoffe wie Harnstoff, Thioharnstoff, Ethylenharnstoff, Ethylenthioharnstoffoder 1,3-Diphenylharnstoff;

x) Carbamate wie N-Phenylcarbamidsäurephenylester oder 2-Oxazolidon;

xi) Imine wie Ethylenimin;

xii) Oxime wie Acetonoxim, Formaldoxim, Acetaldoxim, Acetoxim, Methylethylketoxim, Diisobutylketoxim, Diacetylmonoxim, Benzophenonoxim oder Chlorohexanonoxime;

xiii) Salze der schwefeligen Säure wie Natriumbisulfit oder Kaliumbisulfit;

xiv) Hydroxamsäureester wie Benzylmethacrylohydroxamat (BMH) oder Allylmethacrylohydroxamat; oder

xv) substituierte Pyrazole, Ketoxime, Imidazole oder Triazole; sowie

xvi) Gemische dieser Blockierungsmittel, insbesondere Dimethylpyrazol und Triazole, Dimethylpyrazol und Succinimid oder Butyldiglykol und Trimethylolpropan.

Der Gehalt der erfindungsgemäßen Dual-Cure-Gemische an blockierten und/oder unblockierten Polyisocyanaten (B) kann breit variieren und richtet sich vor allem nach der Funktionalität der Bindemittelgemische (A) bezüglich der thermischen Härtung, d. h. der Anzahl der hierin enthaltenen isocyanatreakiven funktionellen Gruppen. Der Fachmann kann daher im Einzelfall den optimalen Gehalt anhand seines allgemeinen Fachwissens gegebenenfalls unter Zuhilfenahme einfacher Vorversuche leicht ermitteln. Vorzugsweise liegt der Gehalt an blockierten und/oder unblockierten Polyisocyanaten (B), jeweils bezogen auf den Festkörper des erfindungsgemäβen Dual-Cure-Germischs, bei 10 bis 70, bevorzugt 15 bis 65, besonders bevorzugt 20 bis 60, ganz besonders bevorzugt 25 bis 55 und insbesondere 30 bis 50 Gew.-%

Außerdem enthält das erfindungsgemäße Dual-Cure-Gemisch mindestens ein ungesättigtes polyfunktionelles Urethan (C).

Das ungesättigte polyfunktionelle Urethan (C) ist frei von isocyanatreaktiven funktionellen Gruppen. Es enthält im statistischen Mittel mehr als vier, vorzugsweise mindestens fünf, insbesondere sechs, mit aktinischer Strahlung aktivierbare Kohlenstoff-Kohlenstoff-Doppelbindungen im Molekül. Außerdem enthält es mindestens ein hartmachendes Segment als Molokülbsustein. Das hartmachende Segment erhöht als Bestandteil dreidimensionaler polymerer Netzwerke deren Glasübergangstemperatur Tg.

In einer besonderen Ausführungsform der Erfindung sind die ungesättigten polyfunktionellen Urethane (C) aus Polyisocyanaten mit methylsubstituierten cycloaliphatischen Segmenten aufgebaut, insbesondere solchen gewählt aus der Gruppe bestehend aus Isophorondiisocyanat und seinen Oligomeren.

Der Begriff "polyfunktionell" weist daraufhin, daβ das Urethan (C) mindestens zwei Urethangruppen enthält.

Die Kohlenstoff-Kohlenstoff-Doppelbindungen bewirken nach ihrer Aktivierung mit aktinischer Strahlung die Dimerisierung, Oligomerisierung oder die Polymerisation der betreffenden olefinisch ungesättigten Gruppen.

Gut geeignete Kohlenstoff-Kohlenstoff-Doppelbindungen liegen beispielsweise in (Meth)Acryloyl-, Ethacryloyl-, Crotonat-, Cinnamat-, Vinylether-, Vinylester-, Ethenylarylen-, Dicyclopentadienyl-, Norbornenyl-, Isoprenyl-, Isoprenyl-, Isopropenyl-, Allyl- oder Butenylgruppen; Ethenylarylen-, Dicyclopentadienyl-, Norbornenyl-, Isoprenyl-, Isopropenyl-, Allyl- oder Butenylethergruppen oder Ethenylarylen-, Dicyclopentadienyl-, Norbornenyl-, Isoprenyl-, Isopropenyl-, Allyl- oder Butenylestergruppen vor. Von diesen sind (Meth)Acryloylgruppen, insbesondere Acryloylgruppen, von besonderem Vorteil und werden deshalb erfindungsgemäß ganz besonders bevorzugt verwendet.

Bei dem erfindungsgemäß bevorzugt verwendeten ungesättigten polyfunktionellen Urethan (C) handelt es sich demnach um ein Urethan(meth)acrylat.

Die hartmachenden Segmente sind zwei- oder mehrbindige organische Reste. Vorzugsweise werden zweibindige organische Reste verwendet. Daneben können in untergeordneten Mengen mehrbindige, insbesondere dreibindige, organische Reste eingesetzt werden, durch die die Vernetzungsdichte beeinflußt werden kann.

Beispiele gut geeigneter hartmachenden Segmente sind zweibindige aromatische, cycloaliphatische und aromatisch-cycloaliphatische Reste, bei denen innerhalb des ungesättigten polyfunktionellen Urethans (C) mindestens eine verknüpfende Bindung direkt zur cycloaliphatischen und/oder aromatischen Struktureinheit führt. Vorzugsweise führten beide verküpfenden Bindungen zu diesen Struktureinheiten.

Die zweibindigen cycloaliphatischen und aromatischen, insbesondere die cycloaliphatischen, Reste sind vorteilhaft und werden bevorzugt verwendet.

Beispiele geeigneter zweibindiger aromatischer Reste sind substituierte, insbesondere methylsubstituierte, oder unsubstituierte aromatische Reste mit 6 bis 30 Kohlenstoffatomen im Molekül, wie Phen-1,4-, -1,3- oder -1,2-ylen, Naphth-1,4-, -1,3-, -1,2-, -1,5- oder -2,5-ylen, Propan-2,2-di(phen-4'-yl), Methan-di(phen-4'-yl), Diphenyl-4,4'-diyl oder 2,4- oder 2,6-Toluylen.

Beispiele geeigneter zweibindiger cycloaliphatischer Reste sind substituierte oder unsubstituierte, vorzugsweise unsubstituierte, Cycloalkandiyl-Reste mit 4 bis 20 Kohlenstoffatomen, wie Cyclobutan-1,3-diyl, Cyclopentan-1,3-diyl, Cyclohexan-1,3- oder -1,4-diyl, Cycloheptan-1,4-diyl, Norbornan-1,4-diyl, Adamantan-1,5-diyl, Decalin-diyl, 3,3,5-Trimethyl-cyclohexan-1,5-diyl, 1-Methylcyclohexan-2,6-diyl, Dicyclohexylmethan-4,4'-diyl, 1,1'-Dicyclohexan-4,4'-diyl oder 1,4-Dicyclohexylhexan-4,4"-diyl, insbesondere 3,3,5-Trimethyl-cyclohexan-1,5-diyl oder Dicyclohexylmethan-4,4'-diyl. Daneben können in untergeordneten Mengen die entsprechenden Triyl-Reste angewandt werden.

Beispiele geeigneter Substituenten sind die vorstehend beschriebenen.

Grundsätzlich sind die ungesättigten polyfunktionellen Urethane (C) herstellbar durch Umsetzung eines Di- oder Polyisocyanates mit einem Kettenverlängerungsmittel aus der Gruppe der Diole/Polyole und/oder Diamine/Polyamine und/oder Dithiole/Polythiole und/oder Alkanolamine und anschließende Umsetzung der restlichen freien Isocyanatgroppen mit mindestens einer Verbindung, enthaltend mindestens eine, insbesondre eine, der vorstehend beschriebenen isocyanatreaktiven Gruppen, insbesondere Hydroxylgruppen, sowie mindestens eine, insbesondere eine, Kohlenstoff-Kohlenstoff-Doppelbindung.

Gut geeignete Doppelbindungen liegen in den vorstehend beschriebenen olefinisch ungesättigten Gruppen vor. Von diesen sind (Meth)Acryloylgruppen, insbesondere Acryloylgruppen, von besonderem Vorteil und werden deshalb erfindungsgemäß ganz besonders bevorzugt verwendet.

Gut geeignete Verbindungen zur Einführung von Kohlenstoff-Kohlenstoff Doppelbindungen sind die vorstehend beschriebenen Monomeren (a1) und (a2), insbesondere Acrylsäure und Methacrylsäure.

Die hartmachenden Segmente können sowohl über die Di- oder Polyisocyanate als auch über die Kettenverlängerungsmittel eingeführt werden.

Gut geeignete Di- und Polyisocyanate sind aromatische und cycloaliphatische, insbesondere cycloaliphatische, Di- und Polyisocyanate. Als aromatische und cycloaliphatische Di- und Polyisocyanate werden diejenigen Di- und Polyisocyanate angesehen, worin mindestens eine Isocyanatgruppe direkt an eine aromatische oder cycloaliphatische Struktureinheit gebunden ist.

Beispiele geeigneter cycloaliphatischer Di- oder Polyisocyanate zur Einführung der hartmachenden Segmente sind Isophorondiisocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethylcyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Diisocyanatocyclopentan, 1,3-Diisocyanatocyclopentan, 1,2-Diisocyanatocyclohexan, 1,3-Diisocyanatocyclohexan, 1,4-Diisocyanatocyclohexan Dicyclohexylmethan-2,4'-diisocyanat oder Dicyclohexylmethan-4,4'-diisocyanat, insbesondere Isophorondiisocyanat, sowie die Oligomeren dieser Diisocyanate, insbesondere von Isophorondiisocyanat, die Isocyanurat-, Harnstoff-, Urethan-, Biuret-, Uretdion-, Iminooxadiazindion-, Carbodiimid- und/oder Allophanatgruppen enthalten.

Beispiele geeigneter aromatischer Diisocyanate und Polyisocyanate sind 2,4- und 2,6-Toluylendiisocyanat, 1,2-, 1,3- oder 1,4-Phenylendiisocyanat, Naphthalin-1,4-, -1,3-, -1,2-, -1,5- oder -2,5-diisocyanat, Propan-2,2-di(phenyl-4'-diisocyanat), Methan-di(phenyl-4'-Isocyanaten) oder 1,1'-Diphenyl-4,4'-diisocyanat.

Beispiele geeigneter Kettenverlängerungsmittel zur Einführung hartmachender Segmente sind Cyclobutan-1,3-diol, Cyclopentan-1,3-diol, Cyclohexan-1,3- oder-1,4-diol, Cycloheptan-1,4-diol, Norbornan-1,4-diol, Adamantan-1,5-diol, Decalindiol, 3,3,5-Trimethyl-cyclohexan-1,5-diol, 1-Methylcyclohexan-2,6-diol, Dicyclohexylmethan-4,4'-diol, 1,1'-Dicyclohexan-4,4'-diol oder 1,4-Dicyclohexylhexan-4,4"-diol, insbesondere 3,3,5-Trimethyl-cyclohexan-1,5-diol oder Dicyclohexylmethan-4,4'-diol.

Vorzugsweise werden die hartmachenden Segmente über die Di- und Polyisocyanate in die ungesättigten polyfunktionellen Urethane (C) eingebaut.

Beispiele geeigneter Kettenverlängerungsmittel, die keine hartmachenden Segmente enthalten, werden in der deutschen Patentanmeldung DE 199 14 896 A 1, in der deutschen Patentanmeldung DE 44 21 823 A 1, Seite 7, Zeile 65, bis Seite 8, Zeile 2 bis 45, und Seite 10, Zeilen 42 bis 48, oder in der europäischen Patentanmeldung EP 0 089 497, Seite 8, Zeile 17, bis Seite 9, Zeile 1, beschrieben.

Die Mengen an Kettenverlängerungsmitteln, Di-bzw. Polyisocyanaten und Verbindungen mit im statistischen Mittel mindestens einer isocyanatreaktiven Gruppe und mindestens einer Kohlenstoff-Kohlenstoff-Doppelbindung, insbesondere Hydroxyalkyl(meth)acrylate, werden dabei bevorzugt so gewählt, daß

1. das Äquivalentverhältnis der NCO-Gruppen zu den isocyanatreaktiven Gruppen des Kettenverlängerungsmittels zwischen 3 : 1 und 1 : 2, bevorzugt bei 2 : 1, liegt und

2. die isocyanatreaktiven Gruppen der Verbindungen mit im statistischen Mittel mindestens einer isocyanatreaktiven Gruppe und mindestens einer Kohlenstoff-Kohlenstoff-Doppelbindung im Molekül, insbesondere Hydroxyalkyl(meth)acrylate, in stöchiometrischer Menge in bezug auf die noch freien Isocyanatgruppen des Präpolymeren aus Isocyanat und Kettenverlängerungsmittel vorliegen.

Außerdem ist es möglich, die ungesättigten polyfunktionellen Urethane (C) herzustellen, indem zunächst ein Teil der Isocyanatgruppen eines Di- oder Polyisocyanates mit mindestens einer Verbindung mit mindestens einer isocyanatreaktiven Gruppe und mindestens einer Kohlenstoff-Kohlenstoff Doppelbindung im Molekül, insbesondere ein Hydroxyalkyl(meth)acrylat, umgesetzt wird und die restlichen Isocyanatgruppen anschließend mit einem Kettenverlängerungsmittel umgesetzt werden. Auch in diesem Fall werden die Mengen an Kettenverlängerungsmittel, Isocyanat und Verbindung so gewählt, daß das Äquivalentverhältnis der NCO-Gruppen zu den isocyanatreaktiven Gruppen des Kettenverlängerungsmittels zwischen 3 : 1 und 1 : 2, bevorzugt bei 2 : 1 liegt und das Äquivalentverhältnis der restlichen NCO-Gruppen zu den isocyanatreaktiven Gruppen der Verbindung 1 : 1 beträgt. Selbstverständlich sind auch sämtliche Zwischenformen dieser beiden Verfahren möglich Beispielsweise kann ein Teil der Isocyanatgruppen eines Diisocyanates zunächst mit einem Diol als Kettenverlängerungsmittel umgesetzt werden, anschließend kann ein weiterer Teil der Isocyanatgruppen mit der Verbindung, insbesondere dem Hydroxyalkyl(meth)acrylat, und im Anschluß hieran können die restlichen Isocyanatgruppen mit einem Diamin als Kettenverlängerungsmittel umgesetzt werden.
Diese verschiedenen Herstellverfahren der erfindungsgemäß bevorzugt eingesetzten Urethan(meth)acrylate (C) sind beispielsweise aus der europäischen Patentanmeldung EP 0 204 161 A1 bekannt. Die Urethan(meth)acrylate (C) sind handelsübliche Verbindungen und werden beispielsweise unter der Marke Ebecryl®1290 von der Firma UCB, Belgien, vertrieben.
Der Gehalt der erfindungsgemäßen Dual-Cure-Gemische an den ungesättigten polyfunktionellen Urethanen (C) kann breit variieren und richtet sich nach den Erfordernissen des Einzelfalls, insbesondere nach der Vernetzungsdichte, die bei den aus den erfindungsgemäßen Dual-Cure-Gemichen hergestellten erfindungsgemäßen Beschichtungen, Klebschichten und Dichtungen eingestellt werden soll. Vorzugsweise liegt der Gehalt, jeweils bezogen auf den Festkörper des erfindungsgemäßen Dual-Cure-Gemischs bei 5 bis 50, bevorzugt 8 bis 45, besonders bevorzugt 10 bis 40, ganz besonders bevorzugt 12 bis 35 und insbesondere 14 bis 30 Gew.-%.
Darüber hinaus können die erfindungsgemäßen Dual-Cure-Gemische je nach Verwendungszweck mindestens einen Zusatzstoff (D) enthalten.
Sollen sie beispielsweise als pigmentierte Beschichtungsstoffe, insbesondere Füller, Unidecklacke oder Basislacke verwendet werden, können sie farb- und/oder effektgebende, elektrisch leitfähige, magnetisch abschirmende und/oder fluoreszierende Pigmente, Metallpulver, organische Farbstoffe oder Füllstoffe (D) enthalten. Die Pigmente können anorganischer oder anorganischer Natur sein.
Beispiele geeigneter Effektpigmente sind Metallplättchenpigmente wie handelsübliche Aluminiumbronzen, gemäß DE 36 36 183 A1 chromatierte Aluminiumbronzen, und handelsübliche Edelstahlbronzen sowie nichtmetallische Effektpigmente, wie zum Beispiel Perlglanz- bzw. Interferenzpigmente, plättchenförmige Effektpigmente auf der Basis von Eisenoxid, das einen Farbton von Rosa bis Braunrot aufweist oder flüssigkristalline Effektpigmente. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«, und die Patentanmeldungen und Patente DE 36 36 156 A1, DE 37 18 446 A1, DE 37 19 804 A1, DE 39 30 601 A1, EP 0 068 311 A1, EP 0 264 843 A1, EP 0 265 820 A1, EP 0 283 852 A1, EP 0 293 746 A1, EP 0 417 567 A1, US 4,828,826 A oder US 5,244,649 A verwiesen.
Beispiele für geeignete anorganische farbgebende Pigmente sind Weißpigmente wie Titandioxid, Zinkweiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat.
Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz
Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453 »Pigmente« bis »Pigmentvolumenkonzentration«, Seite 563 »Thioindigo-Pigmente«, Seite 567 »Titandioxid-Pigmente«, Seiten 400 und 467, »Natürlich vorkommende Pigmente«, Seite 459 »Polycyclische Pigmente«, Seite 52, »AzomethinPigmente«, »Azopigmente«, und Seite 379, »Metallkomplex-Pigmente«, verwiesen.

Beispiele für fluoreszierende Pigmente (Tagesleuchtpigmente) sind Bis(azomethin)-Pigmente.

Beispiele für geeignete elektrisch leitfähige Pigmente sind Titandioxid/Zinnoxid-Pigmente.

Beispiele für magnetisch abschirmende Pigmente sind Pigmente auf der Basis von Eisenoxiden oder Chromdioxid.

Beispiele für geeignete Metallpulver sind Pulver aus Metallen und Metallegierungen, wie Aluminium, Zink, Kupfer, Bronze oder Messing.

Geeignete organische Farbstoffe sind lichtechte organische Farbstoffe mit einer geringen oder nicht vorhandenen Neigung zur Migration aus den erfindungsgemäßen Dual-Cure-Gemischen und den hieraus hergestellten erfindungsgemäßen Produkten. Die Migrationsneigung kann der Fachmann anhand seines allgemeinen Fachwissens abschätzen und/oder mit Hilfe einfacher orientierender Vorversuche beispielsweise im Rahmen von Tönversuchen ermitteln.

Beispiele geeigneter organischer und anorganischer Füllstoffe sind Kreide, Calciumsulfate, Bariumsulfat, Silikate wie Talkum, Glimmer oder Kaolin, Kieselsäuren, Oxide wie Aluminiumhydroxid oder Magnesiumhydroxid oder organische Füllstoffe wie Kunststoffpulver, insbesondere aus Polyamid oder Polyacrlynitril. Ergänzend wird auf Römpp Lexikon Lacke und Druckfarben, Georg Thieme Verlag, 1998, Seiten 250 ff., »Füllstoffe«, verwiesen.

Es ist von Vorteil, Gemische von plättchenförmigen anorganischen Füllstoffen wie Talk oder Glimmer und nichtplättchenförmigen anorganischen Füllstoffen wie Kreide, Dolomit Calciumsulfate, oder Bariumsulfat zu verwenden, weil hierdurch die Viskosität und das Fließverhalten sehr gut eingestellt werden kann.

Beispiele geeigneter transparenter Füllstoffe sind solche auf der Basis von Siliziumdioxid, Aluminiumoxid oder Zirkoniumoxid, insbesondere aber Nanopartikel auf dieser Basis. Diese transparenten Füllstoffe können auch in den nicht pigmentierten erfindungsgemäßen Beschichtungsstoffen, wie Klarlacken, vorhanden sein.

Zusatzstoffe (D), die in pigmentierten und nicht pigmentierten erfindungsgemäßen Beschichtungsstoffen vorhanden sein können sind

- zusätzliche Vernetzungsmittel, wie Aminoplastharze, wie sie beispielsweise in Römpp Lexikon Lacke und Druckfarben, Georg Thieme Verlag, 1998, Seite 29, »Aminohaxze«, dem Lehrbuch "Lackadditive" von Johan Bieleman, Wiley-VCH, Weinheim, New York, 1998, Seiten 242 ff, dem Buch "Paints, Coatings and Solvents", second completely revised edition, Edit. D. Stoye und W. Freitag, Wiley-VCH, Weinheim, New York, 1998, Seiten 80 ff., den Patentschriften US 4 710 542 A oder EP 0 245 700 A1 sowie in dem Artikel von B. Singh und Mitarbeiter "Carbamylmethylated Melamines, Novel Crosslinkers for the Coatings Industry", in Advanced Organic Coatings Science and Technology Series, 1991,Band 13, Seiten 193 bis 207, beschrieben werden, Carboxylgruppen enthaltende Verbindungen oder Harze, wie sie beispielsweise in der Patentschrift DE 196 52 813 A1 beschrieben werden, Epoxidgruppen enthaltende Verbindungen oder Harze, wie sie beispielsweise in den Patentschriften EP 0 299 420 A1, DE 22 14 650 B1, DE 27 49 576 B1, US 4,091,048 A oder US 3,781,379 A beschrieben werden, von den blockierten und unblockierten Polyisocyanaten (B) verschiedene blockierte und unblockierte Polyisocyanate und/oder Tris(alkoxycarbonylamino)-triazine, wie sie in den Patentschriften US 4,939,213 A, US 5,084,541 A, US 5,288,865 A oder EP 0 604 922 A beschrieben werden;

- sonstige strahlenhärtbare Bestandteile, wie (meth)acrylfunktionelle (Meth)Acrylcopolymere, Polyetheracrylate, Polyesteracrylate, ungesättigte Polyester, Epoxyacrylate, von den ungesättigten polyfunktionellen Urethanen (C) verschiedene Urethanacrylate, Aminoacrylate, Melaminacrylate, Silikonacrylate und die entsprechenden Methacrylate;

- zusätzliche übliche und bekannte Bindemittel, die von den erfingdungsgemäß zu verwendenden (Meth)Acrylatcopolymerisaten (A 1) und (A 2) verschieden sind, wie oligomere und polymere, thermisch härtbare, lineare und/oder verzweigte und/oder blockartig, kammartig und/oder statistisch aufgebaute Poly(meth)acrylate oder Acrylatcopolymerisate, insbesondere die in der Patentschrift DE 197 36 535 A1 beschriebenen; Polyester; die in den Patentschriften DE 40 09 858 A1 oder DE 44 37 535 A1 beschriebenen, Alkyde, acrylierte Polyester; Polylactone; Polycarbonate; Polyether; Epoxidharz-Amin-Addukte; (Meth)Acrylatdiole; partiell verseifte Polyvinylester; Polyurethane und acrylierte Polyurethane, insbesondere die in den Patentanmeldungen EP 0 521 928 A1, EP 0 522 420 A1, EP 0 522 419 A1, EP 0 730 613 A1 oder DE 44 37 535 A1 beschriebenen; oder Polyharnstoffe;

- lacktypische Additive, wie thermisch härtbare Reaktiverdünner (vgl. die deutschen Patentanmeldungen DE 198 09 643 A1, DE 198 40 605 A1 oder DE 198 05 421 A1) oder mit aktinischer Strahlung härtbare Reaktivverdünner (vgl. Römpp Lexikon Lacke und Druckfarben, Stuttgart, New York, 1998, Seiten 491), niedrig siedende organische Lösemittel und/oder hochsiedende organische Lösemittel ("lange Lösemittel"), UV-Absorber, Lichtschutzmittel, Radikalfänger, thermolabile radikalische Initiatoren, Photoinitiatoren, Katalysatoren für die Vernetzung, Entlüftungsmittel, Slipadditive, Polymerisationsinhibitoren, Entschäumer, Emulgatoren, Netzmittel, Haftvermittler, Verlaufmittel, filmbildende Hilfsmittel, rheologiesteuernde Additive, Sag Control Agents (vgl. die Patentanmeldungen DE 199 24 172 A1, DE 199 24 171 A , EP 0 192 304 A1, DE 23 59 923 A1, DE 18 05 693 A1, WO 94/22968, DE 27 51 761 C1, WO 97/12945 oder "farbe + lack", 11/1992, Seiten 829 ff.) oder Flammschutzmittel; Weitere Beispiele geeigneter Lackadditive werden in dem Lehrbuch »Lackadditive« von Johan Bieleman, Wiley-VCH, Weinheim, New York, 1998, beschrieben.

Die vorstehend beschriebenen Zusatzstoffe (D) können auch in den erfindungsgemäßen Dual-Cure-Klebstoffen und -Dichtungsmassen vorhanden sein, sofern sie sich für diese Verwendungszwecke eignen, was der Fachmann leicht anhand seines allgemeinen Fachwissens feststellen kann.

Die Herstellung der erfindungsgemäßen Dual-Cure-Gemische weist keine Besonderheiten auf, sondern erfolgt in üblicher und bekannter Weise durch Vermischen der vorstehend beschriebenen Bestandteile in geeigneten Mischaggregaten, wie Rührkessel, Dissolver, Rührwerksmühlen, statischen Mischern, Zahnkranz-Dispergatoren oder Extruder, nach den für die Herstellung der jeweiligen Dual-Cure-Gemische geeigneten Verfahren vorzugsweise unter Ausschluß aktinischer Strahlung.

Die erfindungsgemäßen Dual-Cure-Gemische können je nach Verwendungszweck in organischen Lösemitteln gelöst und/oder dispergiert oder als ein im wesentlichen oder völlig lösemittelfreies Gemisch vorliegen. Das im wesentlichen oder völlig lösemittelfreie Gemisch kann in flüssiger Formen (100%-System) oder Pulverform vorliegen. Vorzugsweise liegen die erfindungsgemäßen Dual-Cure-Gemische in organischen Lösemitteln gelöst und/oder dispergiert vor.

Die erfindungsgemäßen Dual-Cure-Gemische eignen sich hervorragend als Dual-Cure-Beschichtungsstoffe, -Klebstoffe und -Dichtungsmassen oder zu deren Herstellung. Die erfindungsgemäßen Dual- Cure-Beschichtungsstoffe sind hervorragend für die Herstellung von ein- oder mehrschichtigen, farb- und/oder effektgebenden, elektrisch leitfähigen, magnetisch abschirmenden oder fluoreszierenden Beschichtungen, wie Füllerlackierungen, Basislackierungen oder Unidecklackierungen, oder von ein- oder mehrschichtigen Klarlackierungen geeignet. Die erfindungsgemäßen Dual-Cure-Klebstoffe sind hervorragend für die Herstellung von Klebschichten und die erfindungsgemäßen Dual-Cure-Dichtungsmassen sind hervorragend für die Herstellung von Dichtungen geeignet.

Ganz besondere Vorteile resultieren bei der Verwendung der erfindungsgemäßen Dual-Cure-Gemische als Klarlacke für die Herstellung von ein- oder mehrschichtigen Klarlackierungen. Insbesondere werden die erfindungsgemäßen Klarlacke zur Herstellung von farb- und/oder effektgebenden Mehrschichtlackierungen nach dem naß-in-naß Verfahren verwendet, bei dem ein Basislack, insbesondere ein Wasserbasislack, auf die Oberfläche eines Substrats appliziert wird, wonach man die resultierende Basislackschicht, ohne sie auszuhärten, trocknet und mit einer Klarlackschicht überschichtet. Anschließend werden die beiden Schichten gemeinsam gehärtet.

Methodisch weist die Applikation der erfindungsgemäßen Dual-Cure-Beschichtungsstoffe, -Klebstoffe und Dichtungsmassen keine Besonderheiten auf, sondern kann durch alle üblichen Applikationsmethoden, wie z.B. Spritzen, Rakeln, Streichen, Gießen, Tauchen, Träufeln oder Walzen erfolgen. Vorzugsweise werden bei den erfindungsgemäßen Dual-Cure-Beschichtungsstoffen Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen. Vorzugsweise erfolgt die Applikation unter Ausschluß von Tageslicht, um eine vorzeitige Vernetzung der erfindungsgemäßen Dual-Cure-Gemische zu verhindern.

Als Substrate kommen all die in Betracht, deren Oberfläche durch die gemeinsame Anwendung von aktinischer Strahlung und Hitze bei der Härtung der hierauf befindlichen Dual-Cure-Schichten nicht beschädigt wird. Vorzugsweise bestehen die Substrate aus Metallen, Kunststoffen, Holz, Keramik, Stein, Textil, Faserverbunden, Leder, Glas, Glasfasern, Glas- und Steinwolle, mineral- und harzgebundene Baustoffen, wie Gips- und Zementplatten oder Dachziegel, sowie Verbunden dieser Materialien.

Demnach sind die erfindungsgemäßen Beschichtungsstoffe, -Klebstoffe und - Dichtungsmassen -nicht--nur für Anwendungen auf den Gebieten der Kraflfahrzeugserienlackierung und Kraftfahrzeugreparaturlackierungen hervorragend geeignet, sondern kommen auch für die Beschichtung, das Verkleben und das Abdichten von Bauwerken im Innen- und Außenbereich und von Türen, Fenstern und Möbeln, für die industrielle Lackierung, inklusive Coil Coating, Container Coating und die Imprägnierung und/oder Beschichtung elektrotechnischer Bauteile, sowie für die Lackierung von weißer Ware, inclusive Haushaltsgeräte, Heizkessel und Radiatoren, in Betracht. Im Rahmen der industriellen Lackierungen eignen sie sich für die Lackierung, das Verkleben oder das Abdichten praktisch aller Teile und Gegenstände für den privaten oder industriellen Gebrauch wie Haushaltsgeräte, Kleinteile aus Metall, wie Schrauben und Muttern, Radkappen, Felgen, Emballagen, oder elektrotechnische Bauteile, wie Motorwicklungen oder Transformatorwicklungen.

Im Falle elektrisch leitfähige Substrate können Grundierungen verwendet werden, die in üblicher und bekannter Weise aus Elektrotauchlacken hergestellt werden. Hierfür kommen sowohl anodische als auch kathodische Elektrotauchlacke, insbesondere aber kathodische Elektrotauchlacke, in Betracht. Im Falle von nichtfunktionalisierten und/oder unpolaren Kunststoffoberflächen können diese vor der Beschichtung in bekannter Weise einer Vorbehandlung, wie mit einem Plasma oder mit Beflammen, unterzogen oder mit einer Hydrogrundierung versehen werden.

Auch die Härtung der applizierten erfindungsgemäßen Dual-Cure-Gemische weist keine methodischen Besonderheiten auf, sondern erfolgt nach den üblichen und bekannten thermischen Methoden, wie Erhitzen in einem Umluftofen oder Bestrahlen mit IR-Lampen. Für die Härtung mit aktinischer Strahlung kommen Strahlenquellen wie Quecksilberhoch- oder niederdruckdampflampen, welche gegebenenfalls mit Blei dotiert sind, um ein Strahlenfenster bis zu 405 nm zu öffnen, oder Elektronenstrahlquellen in Betracht. Weitere Beispiele geeigneter Verfahren und Vorrichtungen zur Härtung mit aktinischer Strahlung werden in der deutschen Patentanmeldung DE 198 18 735 A1, Spalte 10, Zeilen 31 bis 61, beschrieben.

Die resultierenden erfindungsgemäßen Beschichtungen, insbesondere die erfindungsgemäßen ein- oder mehrschichtigen farb- und/oder effektgebenden Lackierungen und Klarlackierungen sind einfach herzustellen und weisen hervorragende optische Eigenschaften und eine sehr hohe Licht-, Chemikalien-, Wasser- und Witterungsbeständigkeit auf. Insbesondere sind sie frei von Trübungen und Inhomogenitäten. Außerdem sind sie hart, flexibel und kratzfest. Sie weisen eine hervorragende Zwischenschichthaftung zwischen Basislackierung und Klarlackierung und eine gute bis sehr gute Haftung zu üblichen und bekannten Autoreparaturlackierungen-auf.Nicht zuletzt weisen sie eine gute bis sehr gute Haftung zu Kraftfahrzeug-serienreparaturlackierungen auf. Bekanntermaßen werden bei der Kraftfahrzeüg-Serienreparaturlackierung die fertig lackierten Karosserien noch einmal insgesamt mit den Originalsserienlackierungen (OEM) überlackiert.

Die erfindungsgemäßen Klebschichten verbinden die unterschiedlichsten Substrate auf Dauer haftfest miteinander und haben eine hohe chemische und mechanische Stabilität auch bei extremen Temperaturen und/oder Temperaturenschwankungen.

Desgleichen dichten die erfindungsgemäßen Dichtungen die Substrate auf Dauer ab, wobei sie eine hohe chemische und mechanische Stabilität auch bei extremen Temperaturen und/oder Temperaturschwankungen sogar i. V. m. der Einwirkung aggressiver Chemikalien aufweisen.

Demzufolge weisen die auf den vorstehend aufgeführten technologischen Gebieten üblicherweise angewandten grundierten oder ungrundierten Substrate, die mit mindestens einer erfindungsgemäßen Beschichtung beschichtet, mit mindestens einer erfindungsgemäßen Klebschicht verklebt und/oder mit -mindestens- einer erfindungsgemäßen Dichtung abgedichtet sind bei einem besonders vorteilhaften anwendungstechnischen Eigenschaftsprofil eine besonders lange Gebrauchsdauer auf, was sie wirtschaftlich besonders attraktiv macht.

## Beispiele

### Herstellbeispiel 1

### Die Herstellung eines Methacrylatcopolymerisats (A 1)

In einem geeigneten Laborreaktor ausgerüstet mit Rüher Rückffußkühler und zwei Zulaufgefäßen,wurden 48 Gewichtsteile Solventnaphtha ® vorgelegt und auf 160 °Celsius erhitzt. Anschließend wurden aus dem ersten Zulaufgefäß eine Monomermischung aus 44,5 Gewichtsteilen Ethylhexylacrylat, 10 Gewichtsteilen Styrol, 27 Gewichtsteilen Hydroxyethylmethacrylat und 15 Gewichtsteilen 4-Hydroxybutylacrylat und 3,5 Gewichtsteilen Acrylsäure während vier Stunden und aus dem zweiten Zulaufgefäßen eine Lösung aus 8,0 Gewichtsteilen tert.-Butylperoxyethylhexanoat und 6 Gewichtsteilen Solventnaphtha ® während viereinhalb Stunden gleichmäßig unter Rühren zudosiert. Mit dem Beginn der Zuläufe wurde gleichzeitig begonnen. Nach der Beendigung des zweiten Zulaufs (Initiatorzulauf) wurde die Reaktionsmischung noch während zwei Stunden bei 160 °C nachpolymerisiert. Es resultierte eine Lösung des Methacrylatcopolymerisats (A 1) mit einem Festkörpergehalt von 60,4 Gew.-% (eine Stunde/130 °C) mit einer Säurezahl von 24,3 mg KOH/g Festkörper und einer Hydroxylzahl von 175 mg KOH/g Festkörper. Das Methacrylatcopolymerisat (A 1) wies eine Glasübergangstemperatur Tg von -22 °C auf.

### Herstellbeispiel 2

### Die Herstellung eines Methacrylatcopolymerisats (A 2)

Herstellbeispiel 1 wurde wiederholt, nur daß 61 Gewichtsteile Solventnaphtha ® vorgelegt und als Initiatorzulauf eine Lösung aus 4,5 Gewichtsteilen tert.-Butylperoxyethylhexanoat und 6 Gewichtsteilen Solventnaphtha ® und als Monomerzulauf eine Monomermischung aus 10 Gewichtsteilen Styrol, 31,5 Gewichtsteilen tert.-Butylacrylat, 15 Gewichtsteilen n-Butylmethacrylat, 40 Gewichtsteilen Hydroxypropylmethacrylat und 3,5 Gewichtsteilen Acrylsäure verwendet wurden. Es resultierte eine Lösung des Methacrylatcopolymerisats (A 2) mit einem Festkörpergehalt von 58,6 Gew.-% (eine Sunde/130 °C) mit einer Säurezahl von 27,5 mg KOH/g Festkörper und einer Hydroxylzahl von 156 mg KOH/g Festkörper Das Methacrylatcopolymerisat (A 2) wies eine Glasübergangstemperatur Tg von +65°C auf.

**Beispiel 1**

**Die Herstellung eines erfindungsgemäßen Dual-Cure-Warlacks**

Der erfindungsgemäße Dual-Cure-Klarlack wurde durch Vermischen und Homogenisieren der folgenden Bestandteile hergestellt:

- 53,1 Gewichtsteile der Lösung des Methacrylatcopolymerisats (A 1) gemäß Herstellbeispiel 1,
- 61,4 Gewichtsteile der Lösung des Methacrylatcopolymerisats (A 2) gemäß Herstellbeispiel 2,
- 70,8 Gewichtsteile einer 80 %igen Lösung in Methylethylketon eines mit 2,5-Dimethylpyrazol blockierten Hexamethylendiisocyanats,
- 31,8 Gewichtsteile eines aliphatischen Urethanacrylats auf der Basis von Isophorondiisocyanat mit 6 Acrylatgruppen im Molekül (Ebecryl ® 1290 der Firma UCB, Belgien),
- 1,27 Gewichtsteile einer Photoinitiatormischung aus Irgacure ® 184 und Irgacure ® 819 in Gewichtsverhältnis von 7:1,
- 1,5 Gewichtsteile eines Lichtschutzmittels (Tinuvin ® 400, UV-Absorber der Firma Ciba Specialty Chemicals) und
- 1,5 Gewichtsteile eines reversiblen Radikalfängers auf der Basis eines sterisch gehinderte Amins (HALS) (Tinuvin ® 292 der Firma Ciba Specialty Chemicals).

Der erfindungsgemäße Dual-Cure-Klarlack war lager- und transportstabil.

**Beispiel 2**

**Die Herstellung einer farb- und/oder effektgebenden Mehrschichtlaclderung mit einer erfindungsgemäßen Klarlackierung**

Zur Herstellung der Mehrschichtlackierung wurden Prüftafeln aus Stahl, die mit einer Elektrotauchlackierung einer Trockenschichtdicke von 18 bis 22 µm beschichtet waren, mit einem Wasserfüller beschichtet. Die resultierende Wasserfüllerschicht wurde während 20 Minuten bei 160°C eingebrannt, so daß eine Füllerlackierung einer Trockenschichtdicke von 35 bis 40 µm resultierte. Die Füllerlackierung wurde anschließend mit einem Wasserbasislack der Firma BASF Coatings AG (MB 9040) in einer Schichtdicke von 12 bis 15 µm beschichtet. Die resultierenden Wasserbasislackschichten wurden während 10 Minuten bei 80°C abgelüftet. Hiernach wurde der Klarlack des Beispiels 1 in einer Schichtdicke von 40 bis 45 µm in einem Kreuzgang mit einer Fließbecherpistole pneumatisch appliziert. Anschließend wurden die Klarlackschichten während 10 Minuten bei Raumtemperatur und 10- Minuten bei 80°C abgelüftet. Die abgelüfteten Klarlackschichten wurden zunächst mit UV-Strahlung gehärtet (Dosis: 1.500 mJ/cm$^2$; Bandgeschwindigkeit 4 m/min). Anschließend wurden die Wasserbasislackschichten und die Klarlackschichten während 30 Minuten bei 155°C in einem Umluftofen thermisch gehärtet.

Die Chemikalienfestigkeit wurde mit Hilfe des in der Fachwelt bekannten MB-Gradientenofentests nach einer Alterung der Mehrschichtlackierungen während 72 Stunden bei Raumtemperatur bestimmt. Hierbei zeigten 1%ige Schwefelsäure bei 51 °C, Pankreatin bei 48 °C, Baumharz bei 61 °C und deionisiertes Wasser erst über 72°C eine erste Markierung.

Die erfindungsgemäß Mehrshichtlackierung wies einen Glanz nach DIN 67530 von 90 auf.

Die Kratzfestigkeit wurde mit Hilfe des in der Fachwelt bekannten Amtec-Tests nach einer Alterung der erfindungsgemäßen Mehrschichtlackierungen während sieben Tagen bei Raumtemperatur bestimmt. Es resultierte eine Abnahme des Glanzgrades (20 °) von 22,7.

Die Mikroeindringhärte wurde separat an einer erfindungsgemäßen Klarlackierung bestimmt. Sie lag bei 181 N/mm$^2$ (Universalhärte bei 25,6 mN, Fischersope 100 V mit Diamantpyramide nach Vickers).

Das Maximum des Verlustfaktors tan$\delta$ und der Speichermodul E' des Klarlacks bzw. der Klarlackierung wurden mit Hilfe der DMTA-Methode bestimmt, wie sie im Detail in dem deutschen Patent DE 197 09 467 C1, in dem Artikel von Th. Frey, K.-H. Große-Brinkhaus, U. Röckrath, Cure Monitoring Of Thermoset Coatings, Progress In Organic Coatings, Band 27 (1996), Seiten 59 bis 66, oder in der deutschen Patentanmeldung DE 44 09 715 A1 beschrieben wird. Das Maximum des Verlustfaktors tanδ lag bei 86 °C, der Speichermodul E' bei 4,8 x $10^7$ Pa,also im plastischen Bereich.

Die Versuchsergebnisse untermauern die hervorragenden optischen Eigenschaften, die hohe Chemikalien- und Wasserbeständigkeit, die hohe Flexibilität und hohe Härte sowie die sehr gute Kratzfestigkeit der erfindungsgemäßen Klarlackierungen.

**Herstellbeispiel 3**

**Die Herstellung eines Methacrylatcopolymerisats zur Verwendung in einer Thixotropierpaste**

In einem Laborreaktor mit einem Nutzvolumen von 4 1 ausgestattet mit einem Rührer, zwei Tropftrichtern für die Monomermischung resp. Initiatorlösung, Stickstoffeinleitungsrohr, Thermometer und Rückflußkühler wurden 720 g einer Fraktion aromatischer Kohlenwasserstoffe mit einem Siedebereich von 158 - 172 °C eingewogen. Das Lösemittel wurde auf 140°C aufgeheizt. Nach Erreichen von 140°C wurden eine Monomermischung aus 450 g 2-Ethyl-hexylmethacrylat, 180 g n-Butylmethacrylat, 210 g Styrol, 180 g Hydroxyethylacrylat, 450 g 4-Hydroxybutylacrylat und 30 g Acrylsäure innerhalb von 4 Stunden, und eine Initiatorlösung von 150 g t-Butylperethylhexanoat in 90 g des beschriebenen aromatischen Lösemittels innerhalb von 4,5 Stunden gleichmäßig in den Reaktor dosiert. Mit der Dosierung der Monomermischung und der Initiatoranlösung wurde gleichzeitig begonnen. Nach Beendigung der Initiatordosierung wurde die Reaktionsmischung zwei weitere Stunden auf 140 °C gehalten und danach abgekühlt. Die resultierende Polymerlösung hatte einen Feststoffgehalt von 65%, bestimmt in einem Umluftofen 1 h bei 130 °C, eine Säurezahl von 15 und eine Viskosität von 3 dPas (gemessen an einer 60%igen Anlösung der Polymerlösung in dem beschriebenen aromatischen Lösemittel, unter Verwendung eines ICI Platte-Kegel Viskosimeters bei 23 °C).

**Herstellbeispiel 4**

**Die Herstellung einer Thixotropierpaste**

In einer Laborrührwerksmühle der Firma Vollrath werden 800 g Mahlgut, bestehend aus 323.2 g des Methacrylatcopolymerisats des Herstellbeispiels 3, 187.2 g Butanol, 200.8 g Xylol und 88.8 g Aerosil® 812 (Degussa AG, Hanau), zusammen mit 1100 g Quarzsand (Korngröße 0.7 - 1 mm) eingewogen und unter Wasserkühlung 30 Minuten angerieben. Anschließend wurde von dem Quarzsand abgetrennt.

**Beispiele 3 bis 8**

**Die Herstellung erfindungsgemäßer Zweikomponenten-Dual-Cure-Klarlacke**

**Beispiel 3**

Der Klarlack des Beispiels 3 wurde durch Vermischen und Homogenisieren der folgenden Bestandteile hergestellt:

Stammlack:

- 28,04 Gewichtsteile des Methacrylatcopolymerisats (A 1) des Herstellbeispiels 1,
- 16,87 Gewichtsteile des Methacrylatcopolymerisats (A 2) des Herstellbeispiels 2,
- 20 Gewichtsteile eines aliphatischen Urethanacrylats auf der Basis von Isophorondiisocyanat mit 6 Acrylatgruppen im Molekül (Ebecryl ® 1290 der Firma UCB, Belgien),
- 2,13 Gewichtsteile eines Tris(alkoxycarbonylamino)triazins (TACT ® der Firma CYTEC; 50 %ige Lösung in Butanol),
- 2,13 Gewichtsteile der Thixotropierpaste des Herstellbeispiels 4,
- 14,44 Gewichtsteile Sag Control Agent (Setalux ® 81753 der Firma Akzo; Harnstoffgehalt 1,3 Gew.-%),

- 1,14 Gewichtsteile eines UV-Absorbers (Cyagard ® 1164L; substituiertes Hydroxyphenyltriazin, 65 %ig Xylol),
- 0,76 Gewichtsteile eines reversiblen Radikalfängers (Tinuvin ® 292; sterisch gehindertes Amin (HALS)),
- 2,13 Gewichtsteile Dibasic Ester ® der Firma Du Pont (Gemisch von Dialkylester der Bernsteinsäure, Glutarsäure und Adipinsäure),
- 0,1 Gewichtsteile eines Leitfähigkeitsadditivs (Byk ® ES 80),
- 0,8 Gewichtsteile eines Dispergiermittels (Disperbyk ® 161),
- 0,16 Gewichtsteile eines Verlaufmittels (Byk ® 310),
- 5,2 Gewichtsteile Butyldiglykolacetat,
- 4,8 Gewichtsteile Methoxypropylacetat (technisches Gemisch) und
- 1,3 Gewichtsteile Butylacetat

<u>Verhetzungsmittel:</u>

- 90 %ige Anlösung des Trimeren vom Isocyanurattyp des Hexamethylendiisocyanats in Solventnaphtha/Butylacetat 1 : 1 (Desmodur ® N 3390 der Firma Bayer AG)

Das Verhältnis von Stammlack zu Vernetzungsmittel lag bei 100 : 33.

**Beispiel 4**

Beispiel 3 wurde wiederholt, nur daß anstelle von 28,04 Gewichtsteilen des '1\'femäcrylatcopolymensats (A 1) des Herstellbeispiels 1 und 16,87 Gewichtsteilen des Methacrylatcopolymerisats (A 2) des Herstellbeispiels 2,

- 44,91 Gewichtsteile des Methacrylatcopolymerisats (A 1) des Herstellbeispiels 1

verwendet wurden.

**Beispiel 5**

Beispiel 3 wurde wiederholt, nur daß anstelle von Desmodur ® N 3390 als Vernetzungsmittel

- 54,8 Gewichtsteile Desmodur ® N 3390,
- 35,2 Gewichtsteile des Trimeren vom Isocyanurattyp des Isophorondüsocyanats (Desmodur ® Z4470, 70 %ig, der Firma Bayer AG) und
- 10 Gewichtsteile Butylacetat

verwendet wurden. Das Verhältnis von Stammlack zu Vernetzungsmittel lag bei 100:39,5.

**Beispiel 6**

Beispiel 5 wurde wiederholt, nur daß anstelle von 28,04 Gewichtsteilen des Methacrylatcopolymerisats (A 1) des Herstellbeispiels 1 und 16,87 Gewichtsteilen des Methacrylatcopolymerisats (A 2) des Herstellbeispiels 2,

- 44,91 Gewichtsteile des Methacrylatcopolymerisats (A 1) des Herstellbeispiels 1

verwendet wurden.

**Beispiel 7**

Beispiel 3 wurde wiederholt, nur daß anstelle von Desmodur ® N 3390

- 23 Gewichtsteile Desmodur ® N 3390,
- 64 Gewichtsteile Desmodur ® Z4470,
- 6,5 Gewichtsteile Butylacetat und
- 6,5 Gewichtsteile Solventnaphtha ®

verwendet wurden. Das Verhältnis von Stammlack zu Vernetzungsmittel lag bei 100 : 50.

**Beispiel 8**

Beispiel 7 wurde wiederholt, nur daß anstelle von 28,04 Gewichtsteilen des Methacrylatcopolymerisats (A1) des Herstellbeispiels 1 und 16,87 Gewichtsteilen des Methacrylatcopolymerisats (A 2) des Herstellbeispiels 2,

- 44,91 Gewichtsteile des Methacrylatcopolymerisats -(A1) des Herstellbeispiels 1

verwendet wurden.

Die Klarlacke der Beispiele 3 bis 8 wiesen eine lange Verarbeitungszeit auf und konnten problemlos appliziert werden

**Beispiele 9 bis 14**

**Die Herstellung farb- und/oder effektgebender Mehrschichtlackierungen mit erfindungsgemäßen erfindungsgemäßen Klarlackierungen**

Für das Beispiel 9 wurde der Klarlack des Beispiels 3 verwendet.

Für das Beispiel 10 wurde der Klarlack des Beispiels 4 verwendet.

Für das Beispiel 11 wurde der Klarlack des Beispiels 5 verwendet.

Für das Beispiel 12 wurde der Klarlack des Beispiels 6 verwendet.

Für das Beispiel 13 wurde der Klarlack des Beispiels 7 verwendet.

Für das Beispiel 14 wurde der Klarlack des Beispiels 8 verwendet.

Für die lacktechnischen Prüfungen wurden Mehrschichtlackierungen auf Prüftafeln aus Stahl hergestellt. Diese waren mit einer Elektrotauchlackierung einer Trockenschichtdicke von 18 bis 22 μm beschichtet. Die Prüftafel wurden zunächst mit einem Wasserfüller beschichtet. Die resultierende Wasserfüllerschicht wurde während 20 Minuten bei 160°C eingebrannt, so daß eine Füllerlackierung einer Trockenschichtdicke von 35 bis 40 um resultierte. Die Füilerlackierung wurde anschließend mit einem Wasserbasislack der Firma BASF Coatings AG (MB 9040) in einer Schichtdicke von 12 bis 15 μm beschichtet. Die resultierenden Wasserbasislackschichten wurden während 10 Minuten bei 80°C abgelüftet. Hiernach wurden die Klarlacke der Beispiele 3 bis 8 jeweils in einer Schichtdicke von 40 bis 45 μm in einem Einmalauftrag elektrostatisch vertikal appliziert (Glockentyp: Eccobell). Anschließend wurden die Klarlackschichten währerid-1-0 Minuten bei Raumtemperatur und 10 Minuten bei 80°C abgelüftet. Die abgelüfteten Klarlackschichten wurden zunächst mit UV-Strahlung gehärtet (Dosis: 1.500 mJ/cm$^2$; Bandgeschwindigkeit 4 m/min). Anschließend wurden die Wasserbasislackschichten und die Klarlackschichten während 22 Minuten bei 130°C in einem Umluftofen thermisch gehärtet.

Für die Messung der Mikroeindringhärte wurden separat Klarlackierungen auf Stahlblechen hergestellt (vgl. Beispiel 2). Um deren Härtungsverhalten in Schattenzonen von Substraten zu simulieren, wurde dabei eine Serie von Prüfblechen nur thermisch gehärtet.

Die Kratzfestigkeit wurde mit Hilfe der in der Fachwelt bekannten Tests Amtectest, Bürstentest und Sandtest ermittelt. Der Glanz wurde vor und nach der Belastung nach DIN 67530 bestimmt.

Die Chemikalienfestigkeit wurde mit Hilfe des in der Fachwelt bekannten MB-Gradientenofentests nach einer Alterung der Mehrschichtlackierungen während 72 Stunden bei Raumtemperatur bestimmt. Es werden dabei die Temperaturen angegeben, bei denen sich erstmals eine Schädigung der Klarlackierungen zeigen.

Die Zwischenschichthaftung (Basislackierung/Klarlackierung) wurde mit der Gitterschnittprüfung ermittelt.

Außerdem wurde eine Serie der Prüfbleche geschliffen und mit einer üblichen und bekannten mehrschichtigen Autoreparaturlackierung überlackiert. Die Haftung zwischen Originallackierung und Autoreparaturlackierung wurde ebenfalls mit der Gitterschnittprüfung ermittelt.

Außerdem wurde eine Serie der Prüfbleche zur Simulation der Kraftfahrzeug-Serienreparaturlackieruag in ungeschliffenem Zustand erneut mit dem Wasserbasislack und dem jeweils verwendeten Klarlack der Beispiele 3 bis 8 überschichtet. Anschließend wurden die Serienreparaturlackschichten unter denselben Bedingungen gehärtet wie die Originallackierungen (Mehrschichtlackierungen der Beispiele 9 bis 14). Die Haftung wurde gleichfalls mit der Gitterschnittprüfung ermittelt.

Die Gitterschnittprüfung wurde, wie in Römpp Lexikon Lacke und Druckfarben, Georg Thieme Verlag, Stuttgart, New York, 1998, Seite 263, »Gitterschnittprüfung«, beschrieben, durchgeführt.

Die Ergebnisse der Untersuchungen finden sich in der Tabelle 1.

**Tabelle 1: Ergebnisse der lacktechnischen Prüfungen der Mehrschichtlackierungen bzw. der Klarlackierungen der Beispiele 9 bis 14**

| Test | Bemerkung | Beispiele: 9 | 10 | 11 | 12 | 13 | 14 |
|---|---|---|---|---|---|---|---|
| **Amtec** | Glanz Anfang | 89 | 89 | 88 | 86 | 85 | 88 |
| | Glanz ohne Abwischen | 36 | 47 | 36 | 35 | 26 | 36 |
| | Glanz mit Abwischen | 71 | 60 | 68 | 59 | 51 | 54 |
| | delta Glanz mit Abwischen | 18 | 29 | 20 | 27 | 34 | 34 |
| **Bürstentest** | Glanz Anfang | 89 | 89 | 88 | 86 | 85 | 88 |
| | Glanz nach Belastung | 67 | 68 | 60 | 57 | 52 | 62 |
| | Glanz nach 2h/40 °C | 70 | 73 | 63 | 59 | 56 | 64 |
| | Glanz nach 2h/60°C x | 79 | 73 | 63 | 61 | 58 | 64 |
| | delta Glanz: | | | | | | |
| | Bürstentest | 22 | 21 | 28 | 29 | 33 | 26 |
| | 2h/40°C | 19 | 16 | 25 | 27 | 29 | 24 |
| | 2h/60 °C | 10 | 8 | 23 | 25 | 27 | 19 |
| **Sandtest** | Glanz Anfang | 89 | 89 | 88 | 86 | 85 | 88 |
| | Glanz nach Belastung | 67 | 68 | 65 | 63 | 59 | 65 |
| | Glanz nach 2h/40°C | 68 | 69 | 66 | 63 | 60 | 65 |
| | Glanz nach 2h/60°C | 72 | 74 | 69 | 64 | 60 | 67 |
| | delta Glanz: | | | | | | |
| | Sandtest | 22 | 21 | 22 | 22 | 26 | 23 |
| | 2h/40°C | 21 | 20 | 22 | 22 | 26 | 23 |
| | 2h/60°C | 17 | 15 | 18 | 21 | 25 | 21 |
| **Chemikalien-Beständigkeit (°C)** | Schwefelsäure | 47 | 51 | 57 | 54 | 57 | 53 |
| | Pankreatin | <36 | <36 | < 37 | < 36 | 42 | <36 |
| | Baumharz | > 62 | 59 | > 62 | 60 | >62 | 50 |
| | destilliertes Wasser | >62 | > 62 | > 62 | > 62 | > 62 | >62 |
| **Mikroeindringhärte (N/mm$^2$)** | Härtung: | | | | | | |
| | ohne UV | 109,2 | 83,9 | 109,2 | 83,9 | 145,9 | 112,3 |
| | UV und thermisch | 153,7 | 143,1 | 172,1 | 175,1 | 181,7 | 168,5 |
| **Haftung (GT)** | Zwischenschicht | 0,5 | 0,5 | 0,5 | 1,5 | 1 | 0,5 |
| | Serienreparaturlackierung | 0,5 | 0,5 | 0,5 | 2,5 | 5 | 0,5 |
| | Autoreparaturlackierung | 0,5 | 0,5 | 0,5 | 0,5 | 0,5 | 0,5 |

Die Ergebnisse zeigen die hohe Härte der erfindungsgemäßen Klarlackierung auch in den Schattenzonen, die hohe Chemikalien- und Wasserbeständigkeit, die hohe Kratzfestigkeit und die sehr gute Haftung der erfindungsgemäßen Klarlacke. Außerdem zeigen die Ergebnisse, daß das Eigenschaftsprofil der erfindungsgemäßen Klarlacke über ihre stoffliche Zusammensetzung breit variiert und dem jeweiligen Verwendungszweck hervorragend angepaßt werden kann.

## Patentansprüche

1. Thermisch und mit aktinischer Strahlung härtbares Gemisch, enthaltend

   (A) ein Bindemittel, das frei ist von Kohlenstoff-Kohlenstoff-Doppelbindungen, die mit aktinischer Strahlung aktivierbar sind, enthaltend mindestens ein (Meth)Acrylatcopolymerisat mit im statistischen Mittel mindestens einer isocyanatreaktiven funktionellen Gruppe im Molekül und einer Glasübergangstemperatur Tg von -40 bis +80°C,
   (B) mindestens ein blockiertes und/oder unblockiertes Polyisocyanat, das mindestens ein weiches, flexibilisierendes Segment aufweist, das als Bestandteil dreidimensionaler polymerer Netzwerke deren Glasübergangstemperatur Tg erniedrigt, und
   (C) mindestens ein ungesättigtes polyfunktionelles Urethan, das frei ist von isocyanatreaktiven funktionellen Gruppen und im statistischen Mittel mehr als vier mit aktinischer Strahlung aktivierbare Kohlenstoff Kohlenstoff Doppelbindungen und mindestens ein hartmachendes Segment im Molekül enthält, wobei das hartmachendes Segment als Bestandteil dreidimensionaler polymerer Netzwerke deren Glasübergangstemperatur Tg erhöht.

2. Gemisch nach Anspruch 1, **dadurch gekennzeichnet, daß** das Bindemittel (A)

   (A1) mindestens ein (Meth)Acrylatcopolymerisats mit im statistischen Mittel mindestens einer isocyanatreaktiven funktionellen Gruppe im Molekül und einer Glasübergangstemperatur Tg unterhalb der Raumtemperatur und
   (A2) mindestens ein (Meth)Acrylatcopolymerisat mit im statistischen Mittel mindestens einer isocyanatreaktiven funktionellen Gruppe im Molekül und einer Glasübergangstemperatur Tg oberhalb der Raumtemperatur

   enthält.

3. Gemisch nach Anspruch 2, **dadurch gekennzeichnet, daß** die Glasübergangstemperatur Tg des (Meth)Acrylatcopolymerisats (A 1) unter 0°C und die Glasübergangstemperatur Tg des (Meth)Acrylatcopolymerisats (A 2) oberhalb 30°C liegt.

4. Gemisch nach einem der Ansprüche 1 bis 3, **dadurch gekennzeichnet, daß** die isocyanatreaktiven Gruppen aus der Gruppe, bestehend aus Hydroxyl-, Thiol- sowie primären und sekundären Aminogruppen, ausgewählt werden.

5. Gemisch nach Anspruch 4, **dadurch gekennzeichnet, daß** die isocyanatreaktiven Gruppen Hydroxylgruppen sind.

6. Gemisch nach Anspruch 5, **dadurch gekennzeichnet, daß** die (Meth)Acrylatcopolymerisate (A) eine Hydroxylzahl von 50 bis 300 mg KOH/g aufweisen.

7. Gemisch nach einem der Ansprüche 1 bis 6, **dadurch gekennzeichnet, daß** die (Meth)Acrylatcopolymerisate (A) eine Säurezahl von bis zu 70 mg KOH/g aufweisen,

8. Gemisch nach einem der Ansprüche 1 bis 7, **dadurch gekennzeichnet, daß** die Kohlenstoff-Kohlenstoff-Doppelbindungen in (Meth)Acryloyl-, Ethacryloyl-, Crotonat-, Cinnamat-, Vinylether-, Vinylester-, Ethenylarylen-, Dicyclopentadienyl-, Norbornenyl-,Isoprenyl-, Isoprenyl-Isopropenyl-, Allyl- oder Butenylgruppen; Ethenylarylen-, Dicyclopentadienyl- Norbornenyl-, Isopropenyl-, Isopropenyl-, Allyl- oder Butenylethergruppen oder Ethenylarylen-, Dicyclopentadienyl-, Norbornenyl-, Isoprenyl-, Isopropenyl-, Allyl- oder Butenylestergruppen vorliegen.

9. Gemisch nach Anspruch 8, **dadurch gekennzeichnet, dass** die Kohlenstoff-Kohlenstoff-Doppelbindungen in (Meth)Acryloylgruppen vorliegen.

10. Gemisch nach einem der Ansprüche 1 bis 9, **dadurch gekennzeichnet, daß** das weiche, flexibilisierende Segment aus der Gruppe, bestehend aus

    (i) substituierten oder unsubstituierten, linearen, oder verzweigten Alkandiyl-Resten mit 4 bis 30 Kohlenstoffatomen;
(ii) zweibindigen Polyesterresten mit wiederkehrenden Polyesteranteilern der Formel $-(-C(O)-(CHR^1)_m-CH_2-O-)-$, worin der Index m 4 bis 6 und der Substitutent $R^1$ Wassertoff, ein Alkyl-, Cycloalkyl- oder Alkoxy-Rest bedeutet, wobei kein Substituent mehr als 12 Kohlenstoffatome enthält;
(iii) zweibindigen linearen Polyetherresten der allgemeinen Formel $-(-O-(CHR^2)_o-)_pO-$, wobei der Substituent $R^2$ = Wasserstoff oder ein niedriger, gegebenenfalls substituierter Alkylrest ist und der Index o = 2 bis 6, und der Index p = 2 bis 100;
(iv) linearen zweibindigen Siloxanresten,
(v) zweibindigen hydrierten Polybutadien-und Polyisoprenresten;
(vi) zweibindigen Resten von statistischen oder alternierenden Butadien-Isopren-Copolymerisaten und Butadien-Isopren-Pfropfmischpolymerisaten sowie
(vii) zweibindigen Resten von Ethylen-Propylen-Dien-Copolymerisaten,

ausgewählt werden.

**11.** Gemisch nach einem der Ansprüche 1 bis 10, **dadurch gekennzeichnet, daß** die hartmachenden Segmente aus der Gruppe, bestehend aus zwei- und mehrbindigen aromatischen und cycloaliphatischen Resten, ausgewählt werden.

**12.** Gemisch nach Anspruch 11, **dadurch gekennzeichnet, daß** die hartmachenden Segmente aus der Gruppe der cycloaliphatischen Reste ausgewählt werden.

**13.** Gemisch nach einem der Ansprüche 1 bis 12, **dadurch gekennzeichnet, daß** die blockierten oder unblockierten Polyisocyanate (B) lineare aliphatische Segmente enthalten.

**14.** Gemisch nach Anspruch 13, **dadurch gekennzeichnet, daß** die blockierten oder unblockierten Polyisocyanate (B) mit linearen aliphatischen Segmenten aus der Gruppe, bestehend aus Hexamethylendiisocyanat und seinen Oligomeren, ausgewählt werden.

**15.** Gemisch nach einem der Ansprüche 1 bis 14, **dadurch gekennzeichnet, daß** die ungesättigten polyfunktionellen Urethane (C) aus Polyisocyanaten mit methylsubstituierten cycloaliphatischen Segmenten aufgebaut sind.

**16.** Gemisch nach Anspruch 15, **dadurch gekennzeichnet, daß** die Polyisocyanate mit methylsubstituierten cycloaliphatischen Segmenten aus der Gruppe bestehend aus Isophorondiisocyanat und seinen Oligomeren, ausgewählt werden.

**17.** Gemisch nach einem der Ansprüche 1 bis 16, **dadurch gekennzeichnet, daß** es in organischen Lösemitteln gelöst und/oder dispergiert oder als ein im wesentlichen oder völlig lösemittelfreies Gemisch vorliegt.

**18.** Gemisch nach Anspruch 17, **dadurch gekennzeichnet, daß** das im wesentlichen oder völlig lösemittelfreie Gemisch in flüssiger Form (100%-System) oder Pulverform vorliegt.

**19.** Verwendung des Gemischs nach einem der Ansprüche 1 bis 18 als Beschichtungsstoff, Klebstoffe oder Dichtungsmasse.

**20.** Verwendung nach Anspruch 19, **dadurch gekennzeichnet, daß** der Beschichtungsstoff als Klarlack verwendet wird.

**21.** Verwendung nach Anspruch 19 oder 20, **dadurch gekennzeichnet, daß** die Beschichtungsstoffe, Klebstoffe oder Dichtungsmassen auf den Gebieten der Kraftfahrzeugserienlackierung, der Kraftafahrzeugreparaturlackierung, der Beschichtung von Bauwerken im Innen- und Außenbereich, der Lackierung von Möbeln, Fenstern oder Türen und der industriellen Lackierung, inklusive Coil Coating, Container Coating, der Imprägnierung oder Beschichtung elektrotechnischer Bauteile und der Beschichtung von weißer Ware, inklusive Haushaltsgeräte, Heizkessel und Radiatoren, verwendet werden.

## Claims

**1.** Mixture curable thermally and with actinic radiation, comprising

(A) a binder free from carbon-carbon double bonds activatable with actinic radiation, comprising at least one (meth) acrylate copolymer containing on average per molecule at least one isocyanate-reactive functional group and having a glass transition temperature Tg of from -40 to +80°C,
(B) at least one blocked and/or unblocked polyisocyanate having at least one soft, flexibilizing segment, which as a constituent of three-dimensional polymeric networks lowers their glass transition temperature Tg, and
(C) at least one unsaturated polyfunctional urethane which is free from isocyanate-reactive functional groups and contains on average per molecule more than four carbon-carbon double bonds activatable with actinic radiation and at least one hardening segment, the hardening segment as a Constituent of three-dimensional polymer networks increasing their glass transition temperature Tg.

**2.** Mixture according to Claim 1, **characterized in that** the binder (A) comprises

(A1) at least one (meth)acrylate copolymer containing on average per molecule at least one isocyanate-reactive functional group and having a glass transition temperature Tg below room temperature, and
(A2) at least one (meth)acrylate copolymer containing on average per molecule at least one isocyanate-reactive functional group and having a glass transition temperature Tg above room temperature.

**3.** Mixture according to Claim 2, **characterized in that** the glass transition temperature Tg of the (meth)acrylate copolymer (A1) is below 0°C and the glass transition temperature Tg of the (meth)acrylate copolymer (A2) is above 30°C.

**4.** Mixture according to any of Claims 1 to 3, **characterized in that** the isocyanate-reactive groups are selected from the group consisting of hydroxyl groups, thiol groups, and primary and secondary amino groups.

**5.** Mixture according to Claim 4, **characterized in that** the isocyanate-reactive groups are hydroxyl groups.

**6.** Mixture according to Claim 5, **characterized in that** the (meth)acrylate copolymers (A) have a hydroxyl number of from 50 to 300 mg KOH/g.

**7.** Mixture according to any of Claims 1 to 6, **characterized in that** the (meth)acrylate copolymers (A) have an acid number of up to 70 mg KOH/g.

**8.** Mixture according to any of Claims 1 to 7, **characterized in that** the carbon-carbon double bonds are present in (meth)acryloyl, ethacryloyl, crotonate, cinnamate, vinyl ether, vinyl ester, ethenylarylene, dicyclopentadienyl, norbornenyl, isoprenyl, isopropenyl, allyl or butenyl groups; ethenylarylene ether, dicyclopentadienyl ether, norbornenyl ether, isoprenyl ether, isopropenyl ether, allyl ether or butenyl ether groups; or ethenylarylene ester, dicyclopentadienyl ester, norbornenyl ester, isoprenyl ester, isopropenyl ester, allyl ester or butenyl ester groups.

**9.** Mixture according to Claim 8, **characterized in that** the carbon-carbon double bonds are present in (meth)acryloyl groups.

**10.** Mixture according to any of Claims 1 to 9, **characterized in that** the soft, flexibilizing segment is selected from the group consisting of

(i) substituted or unsubstituted, linear or branched alkanediyl radicals having from 4 to 30 carbon atoms;
(ii) divalent polyester radicals comprising repeating polyester units of the formula $-(-CO-(CHR^1)_m-CH_2-O-)-$, in which the index m is from 4 to 6 and the substituent $R^1$ is hydrogen or an alkyl, cycloalkyl or alkoxy radical, no one substituent containing more than 12 carbon atoms;
(iii) divalent linear polyether radicals of the general formula $-(-O-(CHR^2)_o-)_pO-$, where the substituent $R^2$ is hydrogen or a lower, unsubstituted or substituted alkyl radical and the index o is from 2 to 6, and the index p is from 2 to 100;
(iv) linear divalent siloxane radicals,
(v) divalent hydrogenated polybutadiene and polyisoprene radicals;
(vi) divalent radicals of random or alternating butadiene-isoprene copolymers and butadiene-isoprene graft copolymers; and
(vii) divalent radicals of ethylene-propylene-diene copolymers.

**11.** Mixture according to any of Claims 1 to 10, **characterized in that** the hardening segments are selected from the group consisting of divalent and higher multivalent aromatic and cycloaliphatic radicals.

**12.** Mixture according to Claim 11, **characterized in that** the hardening segments are selected from the group of the cycloaliphatic radicals.

**13.** Mixture according to any of Claims 1 to 12, **characterized in that** the blocked or unblocked polyisocyanates (B) comprise linear aliphatic segments.

**14.** Mixture according to Claim 13, **characterized in that** the blocked or unblocked polyisocyanates (B) comprising linear aliphatic segments are selected from the group consisting of hexamethylene diisocyanate and its oligomers.

**15.** Mixture according to any of Claims 1 to 14, **characterized in that** the unsaturated polyfunctional urethanes (C) are composed of polyisocyanates comprising methyl-substituted cycloaliphatic segments.

**16.** Mixture according to Claim 15, **characterized in that** the polyisocyanates comprising methyl-substituted cycloaliphatic segments are selected from the group consisting of isophorone diisocyanate and its oligomers.

**17.** Mixture according to any of Claims 1 to 16, **characterized in that** it is present in dispersion and/or solution in organic solvents or as a substantially or completely solvent-free mixture.

**18.** Mixture according to Claim 17, **characterized in that** the substantially or completely solvent-free mixture is present in liquid form (100% system) or powder form.

**19.** Use of the mixture according to any of Claims 1 to 18 as coating material, adhesives or sealing compound.

**20.** Use according to Claim 19, **characterized in that** the coating material is used as a clearcoat material.

**21.** Use according to Claim 19 or 20, **characterized in that** the coating materials, adhesives or sealing compounds are used in the fields of automotive OEM finishing, automotive refinish, the coating of buildings, inside and out, the coating of furniture, windows or doors, and industrial coating, including coil coating, container coating, the impregnation or coating of electrical components, and the coating of white goods, including domestic appliances, boilers and radiators.

## Revendications

**1.** Mélange durcissable thermiquement et par un rayonnement actinique, contenant

(A) un liant qui est exempt de doubles liaisons carbone-carbone qui sont activables par un rayonnement actinique, contenant au moins un copolymérisat de (méth)acrylate comportant dans la molécule en moyenne statistique au moins un groupe fonctionnel réactif avec un isocyanate et ayant une température de transition vitreuse Tg de -40 à + 80 °C.
(B) au moins un polyisocyanate bloqué et/ou non bloqué, qui comporte au moins un segment souple, flexibilisant, qui en tant que composant de réseaux polymères tridimensionnels abaisse leur température de transition vitreuse Tg, et
(C) au moins un uréthane polyfonctionnel insaturé, qui est exempt de groupes fonctionnels réactifs avec des isocyanates et comporte dans la molécule en moyenne statistique plus de quatre doubles liaisons carbone-carbone activables par un rayonnement actinique et au moins un segment rigidifiant, le segment rigidifiant élevant, en tant que composant de réseaux polymères tridimensionnels, leur température de transition vitreuse Tg.

**2.** Mélange selon la revendication 1, **caractérisé en ce que** le liant (A) contient

(A1) au moins un copolymérisat de (méth)acrylate comportant en moyenne statistique dans la molécule au moins un groupe fonctionnel réactif avec un isocyanate, et ayant une température de transition vitreuse Tg inférieure à la température ambiante.
(A2) au moins un copolymérisat de (méth)acrylate comportant en moyenne statistique dans la molécule au moins un groupe fonctionnel réactif avec un isocyanate, et ayant une température de transition vitreuse $T_g$

supérieure à la température ambiante.

3. Mélange selon la revendication 2, **caractérisé en ce que** la température de transition vitreuse Tg du copolymérisat de (méth)acrylate (A1) est inférieure à 0 °C et la température de transition vitreuse Tg du copolymérisat de (méth) acrylate (A 2) est supérieure à 30°C.

4. Mélange selon l'une quelconque des revendications 1 à 3, **caractérisé en ce que** les groupes réactifs avec des isocyanates sont choisis dans l'ensemble consistant en des groupes hydroxy, thiol ainsi qu'amino primaires et secondaires.

5. Mélange selon la revendication 4, **caractérisé en ce que** les groupes réactifs avec des isocyanates sont des groupes hydroxy.

6. Mélange selon la revendication 5, **caractérisé en ce que** les copolymérisats de (méth)acrylate (A) ont un indice de groupes hydroxy de 50 à 300 mg de KOH/g.

7. Mélange selon l'une quelconque des revendications 1 à 6, **caractérisé en ce que** les copolymérisats de (méth) acrylate (A) ont un indice d'acide allant jusqu'à 70 mg de KOH/g.

8. Mélange selon l'une quelconque des revendications 1 à 7, **caractérisé en ce que** les doubles liaisons carbone-carbone sont présentes dans des groupes (méth)acryloyle, éthacryloyle, crotonate, cinnamate, éther vinylique, ester vinylique, éthénylarylène, dicyclopentadiényle, norbornényle, isoprényle, isopropényle, allyle ou butényle ; des groupes éther éthénylarylénique, dicyclo-pentadiénylique, norbornénylique, isoprénylique, isopropénylique, allylique ou buténylique, ou des groupes ester éthénylarylénique, dicyclo-pentadiénylique, norbornénylique, isoprénylique, isopropénylique, allylique ou buténylique.

9. Mélange selon la revendication 8, **caractérisé en ce que** les doubles liaisons carbone-carbone sont présentes dans des groupes (méth)acryloyle.

10. Mélange selon l'une quelconque des revendications 1 à 9, **caractérisé en ce que** le segment souple, flexibilisant, est choisi dans l'ensemble constitué par

(i) des radicaux alcanediyle linéaires ou ramifiés, substitués ou non substitués, ayant de 4 à 30 atomes de carbone ;
(ii) des radicaux polyester à deux liaisons, à motifs répétitifs polyester de formule
$-(-C(O)-(CHR^1)_m-CH_2-C-)-$, dans laquelle l'indice m vaut de 4 à 6 et le substituant $R^1$ représente un atome d'hydrogène, un radical alkyle, cycloalkyle ou alcoxy, aucun substituant ne contenant plus de 12 atomes de carbone ;
(iii) des radicaux polyéther linéaires à deux liaisons, de formule générale $-(-O-(CHR^2)_o-)_pO-$, le substituant $R^2$ étant un atome d'hydrogène ou un radical alkyle inférieur, éventuellement substitué, et l'indice o = 2 à 6, et l'indice p = 2 à 100 ;
(iv) des radicaux siloxane linéaires à deux liaisons,
(v) des radicaux polybutadiène et polyisoprène hydrogénés à deux liaisons ;
(vi) des restes à deux liaisons de copolymérisats butadiène/isoprène et copolymérisats greffés butadiène/isoprène, statistiques ou alternes, ainsi que
(vii) des restes à deux liaisons de copolymérisats éthylène/propylène/diène.

11. Mélange selon l'une quelconque des revendications 1 à 10, **caractérisé en ce que** les segments rigidifiants sont choisis dans l'ensemble consistant en des radicaux aromatiques et des radicaux cycloaliphatiques, à deux ou plus de deux liaisons.

12. Mélange selon la revendication 11, **caractérisé en ce que** les segments rigidifiants sont choisis dans le groupe des radicaux cycloaliphatiques.

13. Mélange selon l'une quelconque des revendications 1 à 12, **caractérisé en ce que** les polyisocyanates bloqués ou non bloqués (B) contiennent des segments aliphatiques linéaires.

14. Mélange selon la revendication 13, **caractérisé en ce que** les polyisocyanates bloqués ou non bloqués (B) comportant des segments aliphatiques linéaires sont choisis dans le groupe consistant en l'hexaméthylène-diisocyanate et ses oligomères.

**15.** Mélange selon l'une quelconque des revendications 1 à 14, **caractérisé en ce que** les uréthanes polyfonctionnels insaturés (C) sont choisis parmi des polyisocyanates et des segments cycloaliphatiques substitués par méthyle.

**16.** Mélange selon la revendication 15, **caractérisé en ce que** les polyisocyanates comportant des segments cycloaliphatiques substitués par méthyle sont choisis dans le groupe consistant en l'isophorone-diisocyanate et ses oligomères.

**17.** Mélange selon l'une quelconque des revendications 1 à 16, **caractérisé en ce qu'**il est présent dissous et/ou dispersé dans des solvants organiques ou sous forme d'un mélange pratiquement ou totalement exempt de solvant.

**18.** Mélange selon la revendication 17, **caractérisé en ce que** le mélange pratiquement ou totalement exempt de solvant se trouve sous forme liquide (système 100 %).

**19.** Utilisation du mélange selon l'une quelconque des revendications 1 à 18, en tant que matière de revêtement, adhésifs ou matière d'étanchéité.

**20.** Utilisation selon la revendication 19, **caractérisée en ce que** la matière de revêtement est utilisée en tant que vernis.

**21.** Utilisation selon la revendication 19 ou 20, **caractérisée en ce que** les matières de revêtement, adhésifs ou matières d'étanchéité sont utilisés dans les domaines du peinturage en série de véhicules automobiles, du peinturage de réparation de véhicules automobiles, du revêtement de bâtiments à l'extérieur et à l'intérieur, du peinturage de meubles, fenêtres ou portes et du peinturage industriel, y compris le peinturage de rubans continus (*coil coating*), le peinturage de récipients (*container coating*), l'imprégnation ou le revêtement de composants électrotechniques et le revêtement d'appareils électriques, y compris d'appareils électroménagers, de chaudières et de radiateurs.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0843694 B1
- DE 19818735 A1
- DE 19920799 A1
- EP 0928800 A1
- DE 19920801 A1
- WO 9840170 A
- DE 3807571 A1
- DE 3706095 A1
- EP 0358153 B1
- US 4754014 A1
- DE 4421823 A1
- WO 9222615 A
- DE 19628142 A
- DE 1071241 B1
- EP 0498583 A1
- DE 19828742 A1
- WO 9749745 A
- WO 9749747 A
- CA 2163591 A
- US 4419513 A
- US 4454317 A
- EP 0646608 A
- US 4801675 A
- EP 0183976 A1
- DE 4015155 A1
- EP 0303150 A1
- EP 0496208 A1
- EP 0524500 A1
- EP 0566037 A1
- US 5258482 A1
- US 5290902 A1
- EP 0649806 A1
- DE 4229183 A1
- EP 0531820 A1
- DE 10005228
- DE 19828935 A1
- EP 0922720 A1
- EP 1013690 A1
- EP 1029879 A1
- DE 19609617 A1
- US 4444954 A
- US 5972189 A
- DE 19914896 A1
- EP 0089497 A
- EP 0204161 A1
- DE 3636183 A1
- DE 3636156 A1
- DE 3718446 A1
- DE 3719804 A1
- DE 3930601 A1
- EP 0068311 A1
- EP 0264843 A1
- EP 0265820 A1
- EP 0283852 A1
- EP 0293746 A1
- EP 0417567 A1
- US 4828826 A
- US 5244649 A
- US 4710542 A
- EP 0245700 A1
- DE 19652813 A1
- EP 0299420 A1
- DE 2214650 B1
- DE 2749576 B1
- US 4091048 A
- US 3781379 A
- US 4939213 A
- US 5084541 A
- US 5288865 A
- EP 0604922 A
- DE 19736535 A1
- DE 4009858 A1
- DE 4437535 A1
- EP 0521928 A1
- EP 0522420 A1
- EP 0522419 A1
- EP 0730613 A1
- DE 19809643 A1
- DE 19840605 A1
- DE 19805421 A1
- DE 19924172 A1
- DE 19924171 A
- EP 0192304 A1
- DE 2359923 A1
- DE 1805693 A1
- WO 9422968 A
- DE 2751761 C1
- WO 9712945 A
- DE 19709467 C1
- DE 4409715 A1

**In der Beschreibung aufgeführte Nicht-Patentliteratur**


- Römpp Lexikon Lacke und Druckfarben. Georg Thieme Verlag, 1998, 605-606
- Römpp Lexikon Lacke und Druckfarben. Georg Thieme Verlag, 1998, 598-605606
- Paints, Coatings and Solvents. Wiley-VCH, 1998, vol. 327 - 34
- **von K. Kataoka.** *Chemical Engineering Science,* 1995, vol. 50, 1409-1416
- Effektpigmente. Römpp Lexikon Lacke und Druckfarben. Georg Thieme Verlag, 1998, vol. 176 - 38
- Römpp Lexikon Lacke und Druckfarben. Georg Thieme Verlag, 1998, 180-181
- Füllstoffe. Römpp Lexikon Lacke und Druckfarben. Georg Thieme Verlag, 1998, 250 ff
- Aminohaxze. Römpp Lexikon Lacke und Druckfarben. Georg Thieme Verlag, 1998, 29
- **von Johan Bieleman.** Lackadditive. Wiley-VCH, 1998, 242 ff
- Paints, Coatings and Solvents. Wiley-VCH, 1998, 80 ff
- **von B. Singh ; Mitarbeiter.** Carbamylmethylated Melamines, Novel Crosslinkers for the Coatings Industry. *Advanced Organic Coatings Science and Technology Series,* 1991, vol. 13, 193-207
- *Römpp Lexikon Lacke und Druckfarben,* 1998, 491
- *farbe + lack,* November 1992, 829 ff
- **von Johan Bieleman.** Lackadditive. Wiley-VCH, 1998
- **von Th. Frey ; K.-H. Große-Brinkhaus ; U. Röckrath.** *Cure Monitoring Of Thermoset Coatings, Progress In Organic Coatings,* 1996, vol. 27, 59-66
- Römpp Lexikon Lacke und Druckfarben. Georg Thieme Verlag, 1998, 263